# EUROPEAN PATENT APPLICATION

(11) **EP 4 823 090 A1**
(43) Date of publication of application: **14.10.2026**
(21) Application number: 24901018.2
(22) Date of filing: 03.12.2024
(51) Int. Cl.: H04N 19/105, H04N 19/176, H04N 19/70

(54) **REFERENCE BLOCK SETTING METHOD USING TEMPLATE MATCHING, AND IMAGE ENCODING AND DECODING APPARATUS FOR PERFORMING SAME**

(30) Priority: 04.12.2023 KR 20230172962
(71) Applicant: Atins Inc., Seongnam-si Gyeonggi-do 13449 (KR)
(72) Inventor: LEE, Sun Young, Seongnam-si Gyeonggi-do 13523 (KR)
(74) Representative: Viering, Jentschura & Partner mbB Patent- und Rechtsanwälte
(86) International application number: PCT/KR2024/019560
(87) International publication number: WO 2025/121832

(57) **Abstract**

The present disclosure relates to a method of setting a reference block using template matching and a video encoding and decoding device for performing the same, and the method may include configuring a first template including samples located on a top of a target block; configuring a second template including samples located on a left of the target block; determining one or more templates to be used for template matching from among the first and second templates; and performing template matching using the determined one or more templates to acquire a reference block for the target block.

## Description

### TECHNICAL FIELD

The present disclosure relates to a method of setting a reference block using template matching to perform intra prediction or inter prediction on a video.

### BACKGROUND ART

Compression encoding of a video signal is performed by removing redundant information in consideration of a spatial correlation, a temporal correlation, a probabilistic correlation, and the like.

Among prediction methods used for video encoding, intra prediction is a method of predicting a current block by referring to samples that have already been reconstructed around the block for which encoding is to be carried out.

Recently, due to the development of various media and data transmission media, user demand for high-resolution, highquality videos has been increasing.

Since the encoding data of a high-resolution video has a greater amount of information than the encoding data of a lowresolution or medium-resolution video, the cost of transmitting or storing the encoding data increases.

In order to solve this problem, research is ongoing on encoding and decoding methods to effectively reduce the amount of encoding data for high-resolution videos.

### DISCLOSURE OF INVENTION

### TECHNICAL PROBLEM

An aspect of the present disclosure is to provide a reference block setting method using template matching that can improve video compression performance, and a video encoding and decoding device for performing the same.

### TECHNICAL SOLUTION

A method of setting a reference block according to one embodiment of the present disclosure may include configuring a first template including samples located on a top of a target block; a second template including samples located on a left of the target block; determining one or more templates to be used for template matching from among the first and second templates; and performing template matching using the determined one or more templates to acquire a reference block for the target block.

The video encoding device according to one embodiment of the present disclosure may perform a method of setting a reference block using the foregoing template matching, wherein an index value for indicating one or more templates to be used for the template matching from among the first and second templates is inserted into at least one of a sequence parameter set (SPS), a picture parameter set (PPS), a picture header (PH), and a slice header (SH), and transmitted as a bitstream.

The video decoding device according to one embodiment of the present disclosure may perform a method of setting a reference block using the foregoing template matching, wherein a template to be used for the template matching is determined according to at least one of the shape and location of the target block.

Meanwhile, at least some steps of the foregoing methods may be implemented as a computer-readable recording medium in which a program for executing a computer is recorded, and may be provided as the program itself.

### ADVANTAGEOUS EFFECTS

According to one embodiment of the present disclosure, an encoder may not transmit specific compression information on a target block, and a decoder may derive that compression information of the target block using a template matching method to reduce a number of transmitted bits, thereby improving video compression performance.

According to another embodiment of the present disclosure, when at least some areas of a template used for template matching extends beyond a picture boundary, a location of the block may be restricted or filled by using another area within the picture, or an area extending beyond the picture boundary may be excluded from the template so as to allow template matching to be performed even for a target block or reference block located adjacent to the picture boundary.

### BRIEF DESCRIPTION OF THE DRAWINGS

FIG. 1 is a block diagram for explaining a configuration and operation of a video encoder for encoding a video.
FIG. 2 is a drawing for explaining an embodiment for a method of segmenting blocks of a video.
FIGS. 3 and 4 are drawings for explaining embodiments for an intra prediction method.
FIG. 5 is a drawing showing embodiments of an inter prediction method.
FIG. 6 is a block diagram for explaining a configuration and operation of a video decoder for decoding a video.
FIG. 7 is a drawing for explaining one embodiment of an intra prediction method in an intra block copy (IBC) mode.
FIG. 8 is a drawing for explaining one embodiment of a method of performing intra prediction in an IBC mode using template matching.
FIGS. 9 to 14 are drawings for explaining embodiments for a method of performing inter prediction using template matching.
FIG. 15 is a drawing for explaining embodiments for configuration of a template used for template matching.
FIG. 16 is a flowchart showing a method of setting a reference block using template matching according to one embodiment of the present disclosure.
FIGS. 17 and 18 are drawings for explaining embodiments for a method of determining a template used for template matching.
FIGS. 19 to 26 are drawings for explaining embodiments for a method of processing a template area that extends beyond a picture boundary.

### BEST MODE FOR CARRYING OUT THE INVENTION

Hereinafter, a method and device of encoding and decoding a video according to an embodiment of the present disclosure will be described in detail with reference to the accompanying drawings.

In describing the present disclosure below, a detailed description of related known configurations or functions incorporated herein will be omitted when it is determined that the detailed description thereof may unnecessarily obscure the subject matter of the present disclosure. Furthermore, the terms described below are terms defined in consideration of the functions in the present disclosure, and may vary depending on the intention or custom of the user or operator. Therefore, the terms will be defined throughout the description of the present disclosure.

In addition, in order to efficiently describe technical elements constituting the present disclosure, according to preferred embodiments of the present disclosure to be implemented below, functional components that are already provided in each system or functional components that are commonly provided in the technical field to which the present disclosure belongs will be omitted as much as possible, and functional components that must be additionally provided for the present disclosure will be mainly described.

Anyone skilled in the art will easily understand the functions of elements that have been conventionally used among the functional components that are omitted and not shown below, and also clearly understand the relationship between the components that have been omitted as described above and the components added for the present disclosure.

In this specification, a device that encodes a video to generate a video signal bitstream is referred to as an encryption device, an encoding device, or an encoder, and a device that decodes a video signal bitstream to restore a video is referred to as a decryption device, a decoding device, or a decoder.

A pixel or pel is a smallest unit that constitutes a video, and the terms pixel and sample may be used interchangeably. A sample may generally represent a pixel or a pixel value, or may represent only a pixel or pixel value of the luma component, or only a pixel or pixel value of the chroma component.

Additionally, a unit is used to refer to a basic unit of video processing or a specific location of a picture, and represents an image area including at least one of a luminance component and a chrominance component. Specifically, a unit may be used as a concept including all of a coding tree unit (CTU), a coding unit (CU), a prediction unit (PU), and a transform unit (TU). Furthermore, a block represents an image area including a specific component among luminance components and chrominance components, and an MxN block may represent a set of samples or transform coefficients consisting of M columns and N rows. Here, the terms unit, block, partition, signal and area may be used interchangeably.

Meanwhile, a picture refers to a field or a frame, and the terms may be used interchangeably. For example, when the video is an interlaced scanning video, one frame is divided into an odd (or odd, top) field and an even (or even, bottom) field, and each field consists of one picture unit to be encoded or decoded. Furthermore, when the video is a progressive scanning video, one frame consists of a picture to be encoded or decoded.

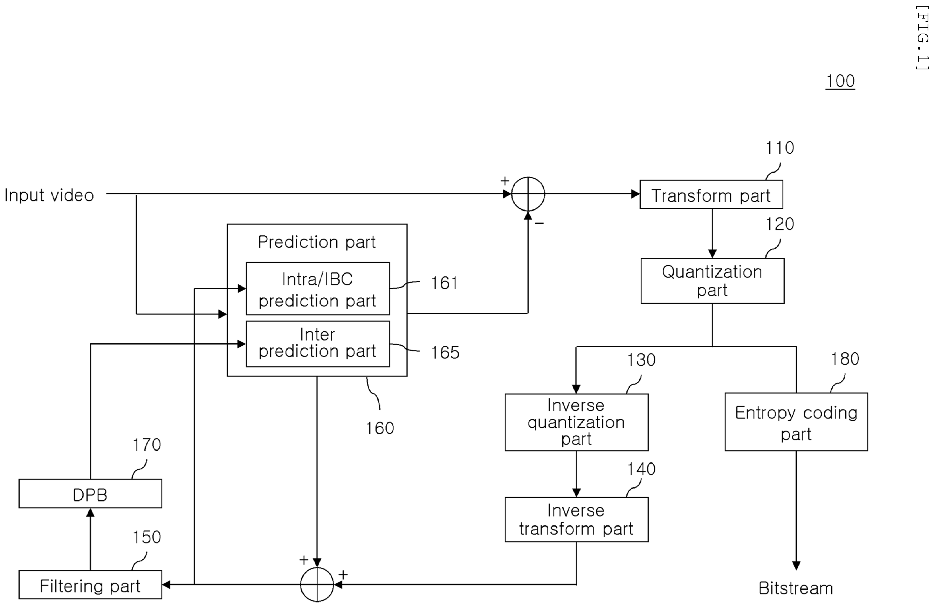

FIG. 1 is a block diagram showing an encoding device according to one embodiment of the present disclosure, which aims to explain a configuration and operation of a video encoder for encoding a video.

Referring to FIG. 1, the video encoder 100 may be configured to include a transform part 110, a quantization part 120, an inverse quantization part 130, an inverse transform part 140, a filtering part 150, a prediction part 160, a decoded picture buffer (DPB) 170, and an entropy coding part 180.

The transform part 110 transforms a residual signal, which is a difference between an input video signal and a prediction signal generated by the prediction part 160, to acquire a transform coefficient value.

For example, a discrete cosine transform (DCT), a discrete sine transform (DST), or a wavelet transform may be used.

A transform kernel used for a transform on a residual block may be a transform kernel having separable characteristics of a vertical transform and a horizontal transform. In this case, the transform for the residual block may be performed separately into a vertical transform and a horizontal transform. For example, the encoder may perform a vertical transform by applying a transform kernel in a vertical direction of the residual block. In addition, the encoder may perform a horizontal transform by applying a transform kernel in a horizontal direction of the residual block.

Meanwhile, the transform kernel may be used as a term referring to a set of parameters used for transforming the residual signal, such as a transform matrix, a transform array, a transform function, or a transform, and may be any one of a plurality of available kernels, and transform kernels based on different transform types may be used for each of the vertical transform and the horizontal transform.

The transform coefficients may be distributed such that higher coefficients are distributed toward an upper left of the block, and coefficients closer to '0' are distributed toward a lower right of the block. Additionally, as a size of the current block increases, there is a possibility that there will be a lot of coefficients of '0' in a lower right area, and in order to reduce the transform complexity of a large block, only an arbitrary upper left area may be left and the remaining area may be reset to '0'.

Additionally, error signals may exist only in some areas in a coding block, and in this case, the transform process may be performed only for some arbitrary areas. For example, in a block having a size of 2Nx2N, an error signal may exist only in a first 2NxN block, and in this case, the transform process may be performed only on the first 2NxN block, but the second 2NxN block may not be encoded or decoded withing performing the transform process.

The encoder may perform an additional transform prior to quantizing the transform coefficient. The foregoing transform method may be referred to as a primary transform, and the additional transform may be referred to as a secondary transform.

The secondary transform may be optional for each residual block, for example, the encoder may perform the secondary transform for an area where it is difficult to concentrate energy in a low-frequency area using only the primary transform to improve coding efficiency.

Specifically, the secondary transform may be additionally performed on blocks in which residual values appear significantly in directions other than a horizontal or vertical direction of the residual block, and the secondary transform may not be performed separately into a vertical transform and a horizontal transform, unlike the primary transform. The foregoing second-order transform may be referred to as a low frequency nonseparable transform (LFNST).

The quantization part 120 quantizes a transform coefficient value output from the transform part 110.

In order to increase coding efficiency, instead of coding a picture signal as it is, a method of predicting a picture using an area already coded through the prediction part 160, and acquiring a restored picture by adding a residual value between the original picture and the prediction picture to the predicted picture is used.

In order to avoid mismatches between the encoder and decoder, when performing prediction in the encoder, information available in the decoder must also be used, and to this end, the encoder may perform a process of restoring the encoded current block again.

The inverse quantization part 130 inverse quantizes the transform coefficient value, and the inverse transform part 140 restores a residual value using the inverse quantized transform coefficient value.

The filtering part 150 performs filtering operations using a deblocking filter, a sample adaptive offset (SAO), an adaptive loop filter (ALF), and the like, to improve the quality of the restored picture and enhance encoding efficiency.

The deblocking filter is a filter for removing distortion within a block generated at a boundary between blocks in the restored picture, in which the encoder may determine whether to apply the deblocking filter to that boundary based on a distribution of pixels included in several columns or rows with respect to an arbitrary boundary within a block.

When the deblocking filter is applied, the filtering part 150 may apply a long filter, a strong filter, or a weak filter depending on a deblocking filtering strength, and may process horizontal filtering and vertical filtering in parallel.

The sample adaptive offset (SAO) may be used to refine an offset from the original video in units of pixels for the residual block to which the deblocking filter is applied. The filtering part 150 may use a method of dividing pixels included in a video into a predetermined number of areas to refine an offset for a specific picture, then determining an area to perform offset compensation, and applying the offset to that area (Band Offset). Additionally, the filtering part 150 may use a method of applying an offset in consideration of the edge information of each pixel (Edge Offset).

The adaptive loop filter (ALF) is a method of dividing pixels included in a video into predetermined groups, then determining one filter to be applied to that group, and performing filtering differentially for each group. Information regarding whether to apply an adaptive loop filter may be signaled on a coding unit basis, and the shape and filter coefficient of the ALF filter to be applied may vary according to each block. In addition, the same form of adaptive loop filter may be applied regardless of the characteristics of a target block to be applied.

The filtered picture may be stored in the DPB 170 to be used as a reference picture.

The prediction part 160 includes an intra/IBC prediction part 161 and an inter prediction part 165, in which the intra/IBC prediction part 161 performs intra prediction and IBC prediction within a current picture, and the inter prediction part 165 performs inter prediction to predict a current picture using the reference picture stored in the DPB 170.

The intra/IBC prediction part 161 performs intra prediction from restored areas within the current picture to transmit intra encoding information to the entropy coding part 180. Here, the intra encoding information may include at least one of an intra prediction mode, a most probable mode (MPM) flag, an MPM index, and information on a reference sample.

Additionally, the intra/IBC prediction part 161 may perform intra block copy (IBC) prediction from restored samples within the current picture to transmit IBC encoding information to the entropy coding part 180.

In this case, the intra/IBC prediction part 161 may acquire a block vector value indicating a reference area used for prediction of a current area by referring to a specific area within the current picture, and perform IBC prediction using the acquired block vector value.

The intra/IBC prediction part 161 may transmit IBC encoding information including at least one of size information of the reference area and block vector information (index information for block vector prediction of the current block within a motion candidate list, block vector difference information) to the entropy coding part 160.

The inter prediction part 165 finds a portion most similar to the current area by referring to a specific area of the restored reference picture, acquires a motion vector value that is a distance between the areas, and transmits motion information (reference direction indication information (L0 prediction, L1 prediction, bi-prediction), reference picture index, motion vector information, etc.) for the acquired reference area to the entropy coding part 180.

In addition, the inter prediction part 165 performs motion compensation using motion information to generate a prediction block for the current block, and transmits inter encoding information including motion information on the reference area to the entropy coding part 180.

Meanwhile, the quantized transform coefficients in the form of a two-dimensional array may be reordered into a onedimensional array for entropy coding.

A method of scanning the quantized transform coefficients may be determined according to a size of the transform block and an intra prediction mode, and diagonal, vertical, and horizontal scans may be applied, and the scan information may be signaled in units of blocks or derived from the decoder according to a set rule.

The entropy coding part 180 generates a bitstream by entropy coding information indicating quantized transform coefficients, intra encoding information, and inter encoding information, and to this end, a variable length coding (VLC) method and an arithmetic coding method may be used.

The variable length coding (VLC) transforms input symbols into a sequence of codewords, in which lengths of the codewords may be variable. For example, frequently occurring symbols may be represented with short codewords, and infrequently occurring symbols may be represented with long codewords.

As a variable length coding method, a context-based adaptive variable length coding (CAVLC) method may be used.

Arithmetic coding transforms consecutive data symbols into a single prime number using the probability distribution of each data symbol, thereby obtaining optimal prime number bits required to express each symbol.

As an arithmetic coding method, a context-based adaptive binary arithmetic code (CABAC) method may be used.

The CABAC is a method of binary arithmetic encoding through multiple context models generated based on probabilities obtained through experiments. The context model may also be called a context model. First, when the symbols are not in a binary form, the encoder binarizes each symbol using exp-Golomb, or the like. The binarized 0 or 1 may be described as a bin.

A CABAC initialization process is divided into context initialization and arithmetic coding initialization. The context initialization, which is a process of initializing the occurrence probability of each symbol, is determined by a type of symbol, a quantization parameter (QP), and a slice type I, P, B. The context model having initialization information may use probability-based values obtained through experiments.

The context model provides the probability of occurrence of a least probable symbol (LPS) or most probable symbol (MPS) for a symbol currently being coded, and information (valMPS) on which empty value between 0 and 1 corresponds to the MPS.

One of multiple context models may be selected through a context index (ctxIdx), and the context index may be derived through information of a block currently to be encoded or information of neighboring blocks.

Initialization for binary arithmetic coding is performed based on a probability model selected from the context model. Binary arithmetic encoding proceeds with encoding through a process of splitting the data into probability intervals based on the occurrence probabilities of 0 and 1, and then allowing a probability interval corresponding to a bin to be processed to be an entire probability interval for a bin to be processed next.

The location information within the probability interval where the last bin has been processed is output. However, since the probability interval cannot be split infinitely, when it is reduced to a predetermined size, a renormalization process is performed to expand the probability interval and output that location information. Additionally, subsequent to processing each bin, a probability update process may be performed in which a probability for a bin to be processed next is newly set through information on the processed bin.

As described above, the generated bitstream is encapsulated into network abstraction layer (NAL) units as basic units.

The NAL units may be divided into video coding layer (VCL) NAL units including video data and non-VCL NAL units including parameter information for decoding the video data, and there may be various types of VCL or non-VCL NAL units.

A NAL unit consists of NAL header information and data called a raw byte sequence payload (RBSP), and the NAL header information includes summary information on the RBSP. The RBSP of a VCL NAL unit includes an integer number of encoded coding tree units.

In order to decode a bitstream in the decoder, the bitstream must first be separated into NAL units, and then each separated NAL unit must be decoded. Meanwhile, information items required for decoding a bitstream may be transmitted by being included in a picture parameter set (PPS), a sequence parameter set (SPS), a video parameter set (VPS), or the like.

Meanwhile, the configuration and operation of the encoder described with reference to FIG. 1 are according to one embodiment of the present disclosure, and some configurations may be omitted or added as needed.

Additionally, a single picture may be encoded by being segmented into sub-pictures, slices, tiles, and the like. A sub-picture may include one or more slices or tiles. When a single picture is encoded by being segmented into multiple slices or tiles, all slices or tiles within the picture must be decoded prior to being displayed on the screen.

When a single picture is encoded into multiple sub-pictures, only an arbitrary sub-picture may be decoded and displayed on the screen. A slice may include multiple tiles or sub-pictures, and a tile may include multiple sub-pictures or slices.

Sub-pictures, slices, and tiles may be encoded or decoded independently of one another so as to be effective in improving parallel processing and processing speed, but an amount of bits may increase because the encoded information of other adjacent sub-pictures, other slices, and other tiles cannot be used.

Furthermore, sub-pictures, slices, and tiles may be encoded by being segmented into multiple coding tree units (CTUs).

The coding tree unit may consist of a luminance coding tree block (CTB) having a size of 128x128 and two chrominance coding tree blocks having a size of 64x64.

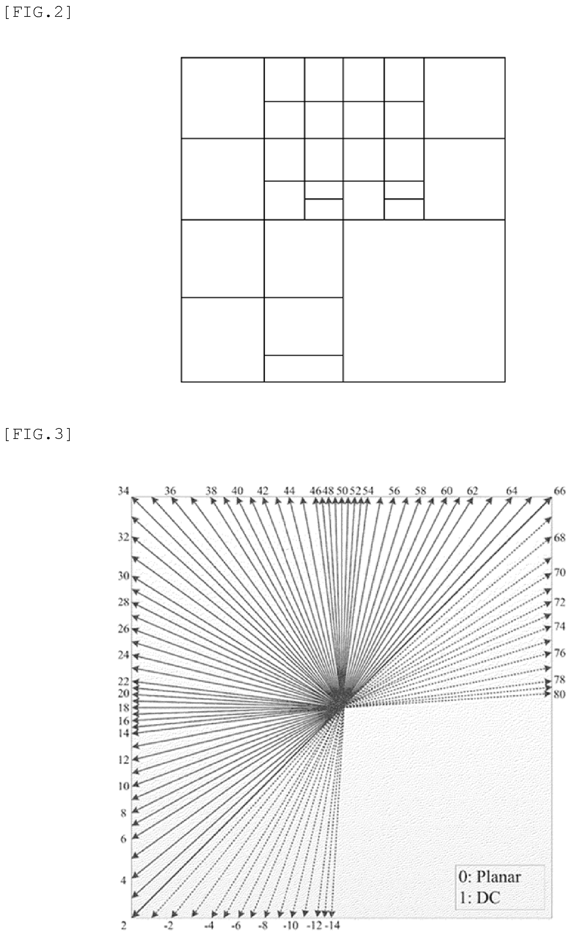

A single coding tree unit may constitute a single coding unit (CU) itself without being segmented, or may be segmented into multiple coding units as shown in FIG. 2. A coding unit may consist of a luminance coding block (CB) and two chrominance coding blocks.

A single coding unit may consist of one transform unit (TU), or may be segmented into multiple transform units. The transform unit may consist of a luminance transform block (TB) and two chrominance transform blocks.

Here, the coding unit represents a basic unit for processing a picture in the process of prediction, transform, quantization, entropy coding, and decoding, and a size and shape of a coding unit within a picture may not be constant.

The coding unit may have a square or non-square shape, and a non-square coding unit may include a vertical coding unit having a height greater than a width and a horizontal coding unit having a width greater than a height.

The coding tree unit is first segmented into a quad tree (QT) structure, so that one node with a size of 2Nx2N may be segmented into four nodes with a size of NxN. Meanwhile, quad tree segmentation may be performed recursively, and not all nodes need to be segmented to the same depth.

A leaf node of a quad tree can be further segmented into a multi-type tree (MTT) structure. For example, in a multi-type tree structure, a single node may be segmented into a binary or ternary tree structure with horizontal or vertical segmentation. Accordingly, there may be four segmentation structures in a multi-type tree structure, such as vertical binary segmentation, horizontal binary segmentation, vertical ternary segmentation, and horizontal ternary segmentation.

In each tree structure, both the width and height of a node may both have values that are power of 2. For example, in a binary tree (BT) structure, a node having a size of 2Nx2N may be segmented into two Nx2N nodes by vertical binary segmentation, and into two 2NxN nodes by horizontal binary segmentation.

In addition, in a ternary tree (TT) structure, a node having a size of 2Nx2N may be segmented into nodes having sizes of (N/2)x2N, Nx2N, and (N/2)x2N by vertical ternary segmentation, and segmented into nodes having sizes of 2Nx(N/2), 2NxN, and 2Nx(N/2) by horizontal ternary segmentation. Such multi-type tree segmentation may be performed recursively.

A leaf node of a multi-type tree may be a coding unit, and when the coding unit is not larger than a maximum transform length, that coding unit may be used as a unit of prediction and transform without further segmentation. Meanwhile, when a width or height of a coding unit is greater than the maximum transform length, that coding unit may be segmented into a plurality of transform units without explicit signaling regarding segmentation.

The foregoing tree segmentation structure may have the same shape (single tree) for the luminance block and the chrominance block, or different shapes (dual trees) for the luminance block and the chrominance block.

Meanwhile, the foregoing block segmentation from a coding tree unit (CTU) to a coding unit (CU) may be performed through a rate-distortion optimization (RDO) process to select a segmentation structure with a smallest rate-distortion cost (RD cost) value within allowable size and depth conditions so as to determine a final coding unit.

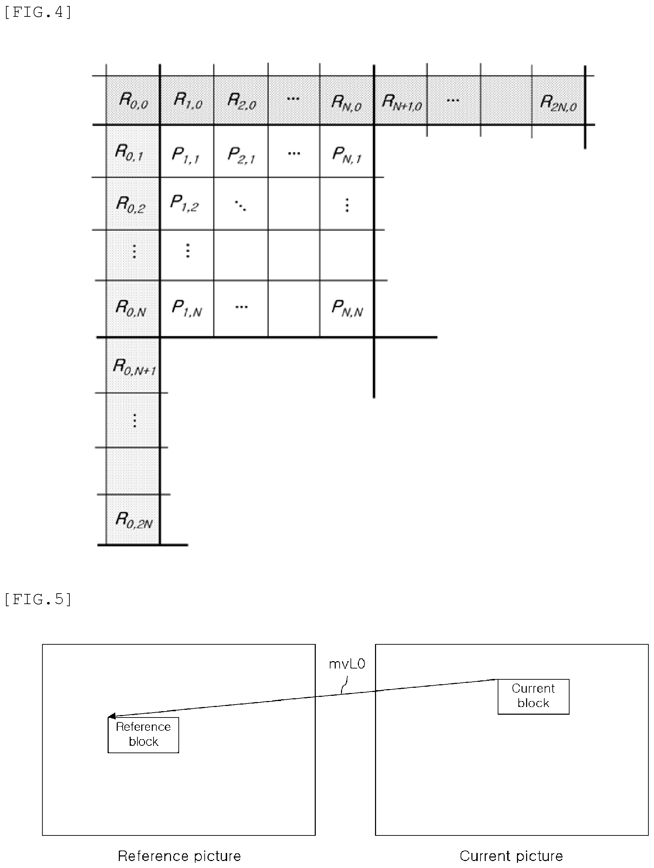

Hereinafter, embodiments of an intra prediction method will be described in more detail with reference to FIGS. 3 and 4.

For intra prediction, intra prediction mode information indicating an intra prediction direction may be signaled, and the intra prediction mode information indicates any one of a plurality of intra prediction modes constituting an intra prediction mode set.

As shown in FIG. 3, the intra prediction mode set may include a planar mode, a DC mode, and 65 directional modes, and each intra prediction mode may be indicated through an intra prediction mode index.

For example, intra prediction mode index "0" may indicate a planar mode, intra prediction mode index "1" may indicate a DC mode, and intra prediction mode indexes "2" to "66" may indicate different directional modes, respectively.

The directional modes respectively indicate different angles within a preset angular range, for example, a directional mode may indicate an angle within an angular range from 45 degrees to -135 degrees in a clockwise direction.

In this case, the intra prediction mode index "2" may indicate a horizontal diagonal (HDIA) mode, the intra prediction mode index "18" may indicate a horizontal (HOR) mode, the intra prediction mode index "34" may indicate a diagonal (DIA) mode, the intra prediction mode index "50" may indicate a vertical (VER) mode, and the intra prediction mode index "66" may indicate a vertical diagonal (VDIA) mode.

When a current block is a non-square block, 20 wide angular modes indicating an angle exceeding 45 degrees in a clockwise direction or below -135 degrees may be additionally used.

Based on the foregoing intra prediction mode information, reference samples to be used for intra prediction for the current block are determined.

For example, when the intra prediction mode index indicates a specific directional mode, a reference sample corresponding to that angle from a current sample of the current block is used for prediction for the current sample.

As described above, surrounding already restored samples may be used as reference samples for intra prediction, and the reference samples may be restored samples located on a left or top of the current block.

Referring to FIG. 4, the reference samples may be samples adjacent to a left boundary and a top boundary of the current block.

For example, when a size of the current block is NxN and samples of a single reference line adjacent to the current block are used for intra prediction, reference samples may be set using (2N*2+1) neighboring samples located on a left (L), a top (T), and a top-left (TL) of the current block.

Meanwhile, samples of multiple reference lines (MRLs) may be used for intra prediction of the current block, and the multiple reference lines may consist of n reference lines located within a preset range from the current block. In this case, separate reference line index information indicating reference lines to be set as reference pixels may be signaled.

Additionally, when at least some of samples to be used as reference samples have not yet been restored, reference samples may be acquired through a reference sample padding process, and a reference sample filtering process may be performed to reduce errors in intra prediction.

Hereinafter, embodiments of an inter prediction method will be described in more detail with reference to FIG. 5.

Referring to FIG. 5, inter prediction is a prediction method that obtains prediction information on a current block, which is a block to be encoded, from a reference block located inside a reference picture, and uses a motion vector (mv) representing a location of the reference block.

The motion information used for inter prediction may include reference direction indicator information (inter_pred_idc), reference picture index (ref_idx_l0, ref_idx_l1), and motion vector (mvL0, mvL1).

Meanwhile, for uni-prediction using an L0 reference picture, predFlagL0 is set to 1 and predFlagL1 is set to 0; for uni-prediction using an L1 reference picture, predFlagL0 is set to 0 and predFlagL1 is set to 1; and for bi-prediction using both L0 and L1 reference pictures, predFlagL0 is set to 1 and predFlagL1 is set to 1.

When the current block is a coding unit (CU), the coding unit (CU) may be divided into multiple sub-blocks, and the motion information on each sub-block may be the same or different from one another, and each sub-block may be encoded or decoded independently of one another.

Furthermore, since the motion vector (mv) of the current block is highly likely to be similar to a motion vector of a neighboring block, the motion vector of the neighboring block may be used as a motion vector predictor (MVP), and in this case, the motion vector of the current block may be derived by using the motion vector of the neighboring block.

In addition, in order to improve the accuracy of the motion vector, a motion vector difference (MVD) between an optimal motion vector for the current block found in the original video and a predicted motion vector value may be signaled.

Motion vectors may have various resolutions, and the resolutions of the motion vectors may vary in units of blocks. The motion vector resolution may be expressed in integer units, halfpixel units, quarter-pixel units, 1/16 pixel units, integer pixel units of 4, and the like.

Here, whether to selectively apply motion vector resolution in units of blocks is signaled by amvr_flag, and which motion vector resolution to apply to the current block may be signaled by amvr_precision_idx.

When bi-prediction is applied, weights for the two prediction blocks may be the same or different when applying the weighted average, and information on the weights may be signaled through bcw_idx.

In addition, in order to increase the accuracy of a predicted value for motion information, a merge mode or advanced motion vector prediction (AMVP) mode may be selectively used in units of blocks.

The merge mode, which is a method of configuring the motion information of the current block to be the same as that of a neighboring block adjacent to the current block, has an advantage of increasing an encoding efficiency of motion information by allowing motion information to propagate spatially without change within a homogeneous motion area.

Meanwhile, the AMVP mode is a method that signals the most optimal motion information by predicting motion information in L0 and L1 prediction directions, respectively, to represent more accurate motion information.

As a method for deriving motion information the merge mode or AMVP mode, a motion candidate list may be constructed by using predicted values of motion information derived from neighboring blocks of the current block, and index information on an optimal motion candidate may be signaled.

For example, in the merge mode, a single merge index (merge_idx) may be signaled, and in the AMVP mode, motion candidate indices (mvp_l0_flag, mvp_l1_flag) for L0 and L1, respectively, may be signaled.

Meanwhile, a motion candidate list induced for a single coding unit may vary, and for each candidate motion list, a merge index or a candidate motion index may be signaled.

In order to construct a motion candidate list in inter prediction, a neighboring block spatially adjacent to the current block may include at least one of a left block, a left below block, an above block, an above right block, and an above left block.

Additionally, a neighboring block temporally adjacent to the current block may be a block including an upper left pixel location on a bottom right block of the current block in the corresponding collocated picture.

Here, when a temporally adjacent neighboring block to the current block is encoded in an intra mode, or when a temporally adjacent neighboring block to the current block is present in an unusable location, a block including a horizontal and vertical center pixel location of the current block in a collocated picture corresponding to the current picture may be used as a temporal neighboring block.

Motion candidate information derived from the corresponding collocated picture as described above may be referred to as a temporal motion vector predictor (TMVP), and a sub-block temporal motion vector predictor (sbTMVP), which is a TMVP derivation method in sub-block units in which a TMVP candidate is derived for each of sub-blocks into which the current block is divided, may also be used.

Meanwhile, in a merge skip mode, information on the remaining block may not be present for a block encoded in a merge mode.

Additionally, in an AMVP-merge mode, the merge mode and the AMVP mode may be used interchangeably for the bidirectional motion information of the current block; for example, motion information in an L0 direction may be derived by using the AMVP mode, and motion information in an L1 direction may be derived using the merge mode.

In the case of bi-prediction, a symmetric MVD (SMVD) mode may be used to reduce an amount of motion information transmitted by making MVD values to be symmetrical to each other for each of the L0 and L1 directions.

In this case, MVD information on the L1 direction, which is symmetric to the L0 direction, may not be transmitted, and reference picture information on the L0 and L1 directions may also not be transmitted and may be derived during the decoding process.

Furthermore, overlapped block motion compensation (OBMC) is a method that generates, when motion information between blocks is different, prediction blocks for the current block using the motion information of neighboring blocks, and then generates a final prediction block for the current block by weighted averaging the prediction blocks. In this case, a blocking phenomenon occurring at a block boundary of a motion-compensated video may be reduced.

Meanwhile, a merge mode with MVD (MMVD) mode may be used to derive a more accurate motion vector by adding a motion vector difference (MVD) to a motion vector derived in a merge mode.

For example, one of the first two candidates included in the candidate list in the merge mode may be used as an initial motion vector, and a final motion vector may be acquired by adding an MVD derived from MVD direction and motion distance information to the initial motion vector.

Decoder-side motion vector refinement (DMVR), which is a method for correcting motion information through a correlation of already restored reference videos to find more accurate motion information, may use the bidirectional motion information of the current block to use a best matching point between reference blocks in a reference picture as new bidirectional motion information within an arbitrary predetermined area of the two reference pictures.

Meanwhile, in the foregoing DMVR, multi-pass DMVR (MP-DMVR) may be used, in which the encoder performs DMVR on a single block to refine motion information, and then divides that block into sub-blocks and performs DMVR in each sub-block unit to refine the motion information of the sub-block.

Additionally, local illumination compensation (LIC) is a method for compensating for a luminance change between blocks, may derive a linear model using neighboring pixels adjacent to the current block, and then compensate for the luminance information of the current block through the linear model.

In addition, in order to express motions such as enlargement, reduction, and rotation, an Affine model-based motion prediction method using four (rotation) or six (enlargement, reduction, rotation) parameter models may be used.

For example, in the case of bi-directional optical flow (BDOF), an amount of pixel change based on optical flow may be estimated from a reference block having a block consisting of bidirectional motion, and used to refine the prediction block.

Prediction refinement with optical flow (PROF) is intended to improve the accuracy of Affine motion prediction in units of sub-blocks to be similar to that of motion prediction in pixel units, and similar to BDOF, a refinement value may be computed for Affine motion compensated pixel values in units of sub-blocks based on optical-flow to obtain a final prediction signal.

Meanwhile, in the case of combined inter-intra prediction (CIIP), when generating a prediction block for the current block, a final prediction block may be generated by weighted averaging a prediction block generated by an intra prediction method and a prediction block generated by an inter prediction method.

Furthermore, Bi-prediction with CU-level Weights (BCW) is a method that applies weights in units of blocks to two motion-compensated prediction blocks from different reference pictures to perform a weighted average.

In addition, multi-hypothesis prediction (MHP) may be used to perform weighted prediction through various prediction signals by transmitting additional motion information to uni- and bi-motion information.

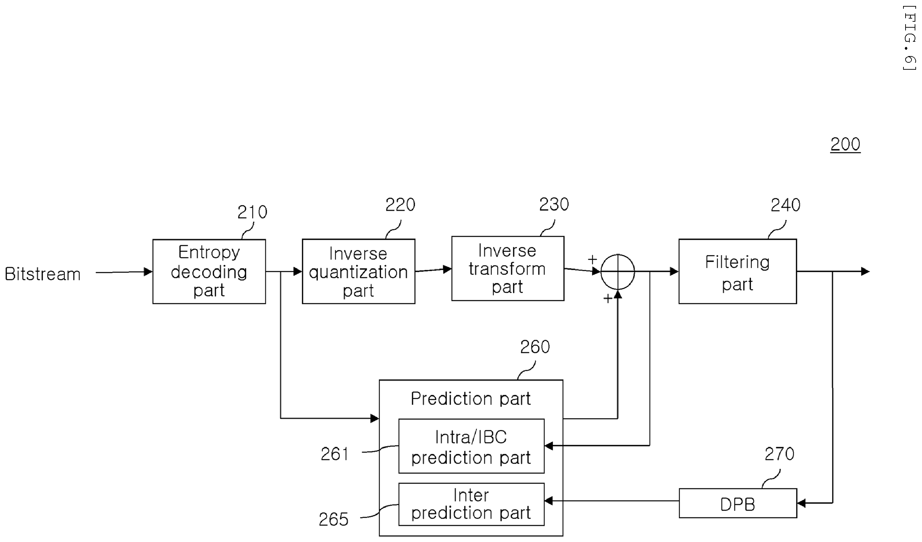

FIG. 6 is a block diagram showing a decoding device according to one embodiment of the present disclosure, which aims to explain a configuration and operation of a video decoder for decoding a video.

Referring to FIG. 6, a video decoder 200 may be configured to include an entropy decoding part 210, an inverse quantization part 220, an inverse transform part 230, a filtering part 240, a prediction part 260, a decoded picture buffer (DPB) 270.

The entropy decoding part 210 entropy decodes a bitstream to extract transform coefficient information, intra encoding information, inter encoding information, and the like for each area.

For example, the entropy decoding part 210 may acquire a binary code for transform coefficient information of a specific area from a bitstream, and may acquire a quantized transform coefficient by inverse binarizing the binary code.

The inverse quantization part 220 inverse quantizes the quantized transform coefficient, and the inverse transform part 230 restores a residual value using the inverse quantized transform coefficient.

Meanwhile, the residual value acquired from the inverse transform part 230 is added to a prediction value acquired from the prediction part 260 to restore the original pixel value.

The filtering part 240 performs a filtering operation using a deblocking filter, a sample adaptive offset, an adaptive loop filter, and the like to improve an image quality of the restored picture, and the filtered picture may be output or stored in the DPB 270 to be used as a reference picture for a next picture.

The prediction part 260 includes an intra/IBC prediction part 261 and an inter prediction part 265, and generates a prediction picture by utilizing an encoding type decoded through the entropy decoding part 210, a transform coefficient for each area, intra/inter encoding information, and the like.

In order to restore a current block for which decoding is performed, the decoded area of a current picture including the current block or other pictures may be used. A picture (or tile/slice) that performs intra prediction or intra BC prediction using only the current picture for restoration is called an intra picture or I picture (or tile/slice), and a picture (or tile/slice) that can perform all of intra prediction, inter prediction, and intra BC prediction is called an inter picture (or tile/slice).

Meanwhile, a picture (or tile/slice) that uses at most one motion vector and reference picture index to predict sample values of each block among inter pictures (or tiles/slices) is called a predictive picture or P picture (or tile/slice), and a picture (or tile/slice) that uses at most two motion vectors and reference picture indices is called a bi-predictive picture or B picture (or tile/slice).

That is, a P picture (or tile/slice) uses at most one set of motion information to predict each block, and a B picture (or tile/slice) uses at most two sets of motion information to predict each block. Here, the motion information set may include one or more motion vectors and one reference picture index.

The intra/IBC prediction part 261 may generate a prediction block using intra encoding information and restored samples within the current picture, and the intra encoding information may include at least one of an intra prediction mode, a most probable mode (MPM) flag, and an MPM index.

The intra/IBC prediction part 261 may predict sample values of the current block using restored samples located on a left and/or a top of the current block as reference samples.

For example, the reference samples may be samples adjacent to a left boundary of the current block and/or samples adjacent to a top boundary thereof, and may be samples located on a line within a preset distance from the left boundary of the current block and/or samples located on a line within a preset distance from the top boundary of the current block among samples neighboring blocks of the current block. In this case, the neighboring blocks of the current block may include at least one of a left (L) block, an above (A) block, a below-left (BL) block, an above-right (AR) block, or an above-left (AL) block adjacent to the current block.

Additionally, the intra/IBC prediction part 261 may restore a current area by referring to a specific area including restored samples within the current picture. To this end, the intra/IBC prediction part 261 may perform IBC prediction using IBC encoding information acquired from the entropy decoding part 210, and the IBC encoding information may include block vector information.

The inter prediction part 265 may generate a prediction block using a reference picture and inter encoding information stored in the DPB 270, and the inter encoding information may include a set of motion information (reference picture index, motion vector information, etc.) of the current block for the reference block.

Meanwhile, inter prediction may include L0 prediction, L1 prediction, and bi-prediction.

The L0 prediction is a prediction using one reference picture included in an L0 picture list, and the L1 prediction is a prediction using one reference picture included in an L1 picture list. To this end, one set of motion information (e.g., motion vectors and reference picture indices) may be required.

In a bi-prediction method, at most two reference areas may be used, and the two reference areas may exist in the same reference picture or may exist in different pictures. Accordingly, in at most two sets of motion information used in the bi-prediction method, two motion vectors may correspond to the same reference picture index or may correspond to different reference picture indices.

In this case, the reference pictures, which are pictures located temporally before or after the current picture, may be completed pictures that have already been restored, and the two reference areas used in the bi-prediction method may be areas selected from the L0 picture list and the L1 picture list, respectively.

The inter prediction part 265 may acquire a reference block of the current block using a motion vector and a reference picture index, and the reference block exists within a reference picture corresponding to the reference picture index.

Additionally, a sample value of a block specified by a motion vector or its interpolated value may be used as a predictor of the current block. For motion prediction with pixel accuracy in subpel units, an 8-tap interpolation filter may be used for a luminance signal and a 4-tap interpolation filter may be used for a chrominance signal.

Meanwhile, the configuration and operation of the decoder described with reference to FIG. 6 are according to one embodiment of the present disclosure, and some configurations may be omitted or added as needed, and the decoder may decode a video by performing a reverse process of the foregoing encoding method of the encoder.

According to an embodiment of the present disclosure, intra or inter prediction as described above may be performed in an encoder or decoder using template matching.

Template matching is a method of constructing a template using restored pixels around the current block, finding the reference block with the highest similarity between the template of the current block and the template of the reference block to use it for intra or inter prediction.

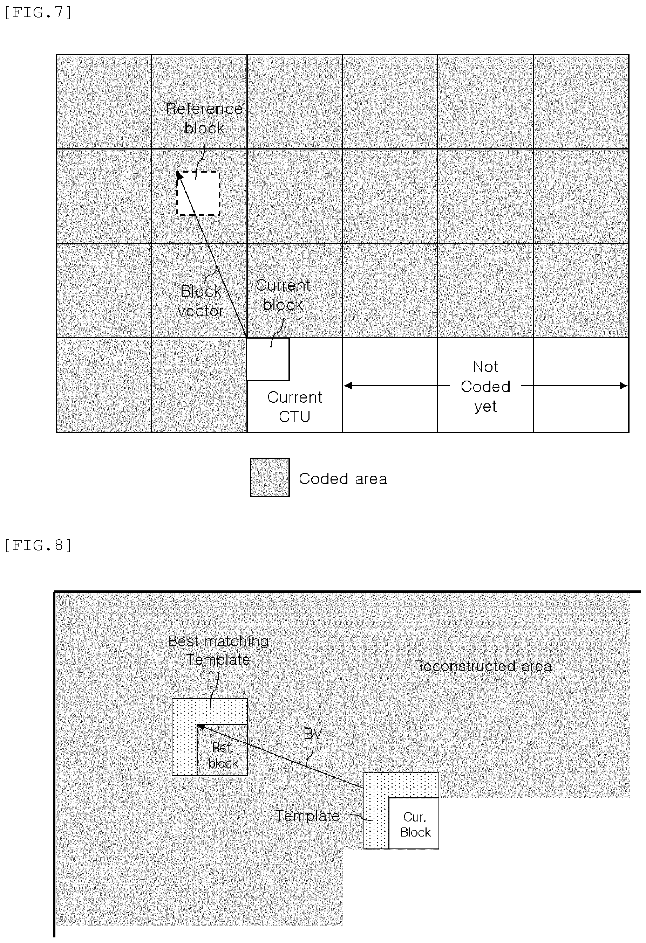

Hereinafter, with reference to FIGS. 7 to 14, embodiments for a method of performing intra or inter prediction using template matching will be described.

According to one embodiment of the present disclosure, template matching may be used for intra prediction in an IBC mode.

Referring to FIG. 7, in an IBC mode, prediction information on a current block, which is a block to be encoded, can be obtained from a reference block that has already been decoded, which is located within the same picture.

In this case, vector information (including a direction and magnitude) from a current block to a reference block is referred to as a block vector (BV).

Although the foregoing IBC prediction method is intra prediction, it is similar to an inter prediction method in terms of deriving and transmitting motion information of a block to be encoded (current block).

Accordingly, the IBC prediction method may be divided into an ibc_skip/merge mode and an ibc_amvp mode, and ibc_skip/merge and ibc_amvp may use encoding, information transmission, and decoding methods similar to skip, merge, and advanced motion vector prediction (AMVP) in inter prediction.

A syntax structure for IBC prediction may be shown in Table 1 below, and sps_ibc_enabled_flag in a sequence parameter set (SPS) and a syntax (sps_six_minus_max_num_ibc_merge_cand) indicating a maximum size of candidate lists in the ibc_skip/merge mode when that flag is activated may be transmitted.

**[Table 1]**

| |
|---|
| seq_parameter_set_rbsp( ) { |
| **sps_ibc_enabled_flag** |
| if( sps_ibc_enabled_flag ) |
| **sps_six_minus_max_num_ibc_merge_cand** |
| ... |

Referring to Table 2 below, in a coding unit (CU) that is a block to be encoded, a flag (pred_mode_ibc_flag) indicating whether that block is encoded as an IBC mode and a flag (general_merge_flag) indicating whether that block is encoded as an ibc_merge mode may be transmitted.

Furthermore, in the case of an ibc_amvp mode, a block vector (BV) value of that block may be derived by using mvd, mvp, and amvr values.

**[Table 2]**

| |
|---|
| coding_unit( x0, y0, cbWidth, cbHeight, cqtDepth, treeType, modeType ) { |
| if( ( ( sh_slice_type = = I && cu_skip_flag[ x0 ][ y0 ] = =0 ) \| \| |
| ( sh_slice_type != I && ( CuPredMode[ chType ][ x0 ][ y0 ] != MODE_INTRA ∥ |
| ( ( ( cbWidth = = 4 && cbHeight = = 4 ) ∥ modeType = = MODE_TYPE_INTRA ) |
| && cu_skip_flag[ x0 ][ y0 ] = = 0 ) ) ) ) && |
| cbWidth <= 64 && cbHeight <= 64 && modeType != MODE_TYPE_INTER && |
| sps_ibc_enabled_flag && treeType != DUAL_TREE_CHROMA ) |
| **pred_mode_ibc_flag** |
| ... |
| } else if( treeType != DUAL_TREE_CHROMA ) { /* MODE_INTER or MODE_IBC */ |
| if( cu_skip_flag[ x0 ][ y0 ] = = 0) |
| **general_merge_flag**[ x0 ][ y0 ] |
| if( general_merge_flag[ x0 ][ y0 ] ) |
| merge_data( x0, y0, cbWidth, cbHeight, chType ) |
| else if( CuPredMode[ chType ][ x0 ][y0 ] = = MODE_TBC ) { |
| mvd_coding( x0, y0, 0, 0 ) |
| if( MaxNumlbcMergeCand > 1 ) |
| **mvp_I0_flag**[ x0 ] [ y0 ] |
| if( sps_amvr_enabled_flag && |
| ( MvdL0[ x0 ][ y0 ][ 0 ] != 0 ∥ MvdL0[ x0 ][ y0 ][ 1 ] != 0 ) ) |
| **amvr_precision_idxB**[ x0 ][ y0 ] |
| } else { |
| ... |

Meanwhile, referring to Table 3 below, in the case of an ibc_skip/merge mode, a block vector (BV) value of that block may be derived by using merge_idx information.

**[Table 3]**

| |
|---|
| merge_data( x0, y0, cbWidth, cbHeight, chType ) { |
| if( CuPredMode[ chType ][ x0 ][ y0 ] = = MODE_IBC ) { |
| if( MaxNumlbcMergeCand > 1 ) |
| **merge_idx**[ x0 ][ y0 ] |
| } else { |

FIG. 8 is a is a drawing for explaining one embodiment of a method of performing intra prediction in an IBC mode using template matching.

As described above, in an IBC mode, in order to use the reference block in the same picture as prediction information on a block to be encoded, a block vector (BV), which is motion information on a target block, is derived and transmitted to a decoding device.

Meanwhile, in an IBC mode using template matching, the use of the reference block in the same picture as prediction information on a target block is the same as in the above IBC mode, but a block vector (BV), which is motion information on the target block, is not transmitted to the decoding device, and the decoding device may find prediction information by searching for the reference block on its own through a template matching process.

Referring to FIG. 8, a restored template area may be defined around a current block (Cur. Block), and a prediction block (Ref. Block) may be obtained by searching for a template (best matching template) area that most closely matches the template area of the current block in an area (reconstructed area) within the same picture.

Furthermore, based on a location of the prediction block (Ref. Block) obtained as described above, a block vector (BV) value for the current block (Cur. Block) may be derived.

As described above, in an IBC mode using template matching, a block vector (BV) for a target block may be derived in a decoding device, and that block vector (BV) value may be used for intra prediction in the same manner as a block vector (BV) value in the IBC mode.

As another embodiment using template matching for intra prediction in an IBC mode, after configuring a merge candidate list or AMVP candidate list for IBC, an error value for each candidate may be calculated through template matching, and the candidate list may be reordered according to the calculated template error value.

For example, the block vector candidate list (BV candidate list) may include BV(s) of one or more neighboring blocks adjacent to a target block, BV(s) stored in a block vector buffer (BV buffer), and a default BV, but the present disclosure is not limited thereto.

Meanwhile, the error value, which indicates a difference between a template of a target block and a template of a reference block pointed to by that candidate, may be computed as a sum of absolute differences (SAD), but the present disclosure is not limited thereto, and various values such as a mean removal SAD (MRSAD), a sum of absolute transformed differences (SATD), a weighted SAD, or a mean squared error (MSE) may be used adaptively depending on an intra prediction mode of the target block.

The encoder may reorder candidates included in a candidate list in order of smallest template error value, then select a final candidate through a rate-distortion optimization (RDO) process, and transmit an index value of the selected candidate to the decoder through a bitstream.

As described above, as the candidate list is reordered in order of smallest template error value, a number of bits for transmitting candidate index values to the decoder may be saved, and in addition, when a candidate having a smallest template error value is selected as a final candidate, the index value may not be transmitted.

For example, when a maximum number of candidates included in the merge candidate list is 5, a binary representation of the 5 candidates may be as shown in Table 4 below.

**[Table 4]**

| **Index** | **BV** | **Codeword** | **Bits** |
|---|---|---|---|
| 0 | (1,1) | 0 | 1 |
| 1 | (1,0) | 10 | 2 |
| 2 | (0,1) | 110 | 3 |
| 3 | (2,0) | 1110 | 4 |
| 4 | (2,1) | 1111 | 4 |

In the case of Table 4, when a value of BV (0,1) having index 2 is selected as a final candidate through the RDO process in a block vector candidate list, a BV index value may be transmitted to the decoder by being included in the bitstream as a 3-bit codeword "110".

Table 5 below shows an example of a result of reordering the block vector candidate list shown in Table 4 in order of smallest template error value.

**[Table 5]**

| **Index** | **BV** | **Codeword** | **Bits** |
|---|---|---|---|
| 0 | (0,1) | 0 | 1 |
| 1 | (1,0) | 10 | 2 |
| 2 | (1,1) | 110 | 3 |
| 3 | (2,1) | 1110 | 4 |
| 4 | (2,0) | 1111 | 4 |

In the case of Table 5, when a value of BV (0,1) is selected as a final candidate through the RDO process in a block vector candidate list, a BV index value may be represented as a 1-bit codeword "0", and a number of bits to pass the BV index value to the decoder may be saved.

A maximum number of candidates, binarization method, and BV value of the candidate list described above with reference to Table 4 and Table 5 are examples, and the present disclosure is not limited thereto, and video compression performance may be improved through candidate list reordering using template matching as described above.

As another embodiment of using template matching for intra prediction in an IBC mode, instead of transmitting a value representing a resolution or precision of a block vector (BV) to the decoder, a BV value may be transmitted to the decoder at high resolution (or precision), and the BV value may be compensated to a lower resolution (or precision) using template matching in the decoder.

For example, the encoder may transmit the BV value to the decoder at 4-pixel resolution, and the decoder may compensate or refine the BV value at 1-pixel resolution using template matching.

The encoder may specify a BV value in units of 0, 4, 8, 12, and 16 pixels that are multiples of 4, and transmit that information to the decoder, for example, transmit (12,8) to the decoder as a BV value of the target block.

In this case, the decoder may set a search range for template matching to between 8 and 16 based on the x-axis and between 4 and 12 based on the y-axis, and search for a template having a minimum error value in units of 1 pixel (1-pixel resolution) within the search range to set a block having a template with a minimum error value as a final reference block.

In this way, the encoder may not transmit an index (e.g., abvr index) value to indicate a resolution of the BV value, but transmit the BV value at 4-pixels resolution as a default value, and the decoder may compensate for the BV value at 1-pixel resolution, thereby saving a number of bits for transmitting that index (e.g., abvr index).

Alternatively, the number of the resolution for the BV value may be reduced from the existing resolutions (e.g., 4-pixel, 1-pixel, 1/4-pixel) to a smaller number of resolutions (e.g., 4-pixel, 1-pixel), thereby allowing the encoder to transmit an index value finally selected from a small number of resolutions (e.g., 4-pixel, 1-pixel) to the decoder.

In this case, the decoder may compensate for the BV value to a lower resolution than the transmitted resolution through a template matching process, and accordingly, save a number of bits for expressing and transmitting an index (e.g., abvr index) indicating the resolution of the BV value.

For example, as shown in Table 6 below, when the resolution of the BV value can be transmitted in three resolutions (4-pixel, 1-pixel, 1/4-pixel), if the resolution of the BV value for the target block is 1-pixel, that resolution value may be expressed and transmitted as a 2-bit codeword '10'.

**[Table 6]**

| **Index** | **Resolution** | **Codeword** | **Bits** |
|---|---|---|---|
| 0 | 1/4-pixel | 0 | 1 |
| 1 | 1-pixel | 10 | 2 |
| 2 | 4-pixel | 11 | 2 |

Meanwhile, as shown in Table 7 below, when the number of the resolution for the BV value is reduced to two resolutions (4-pixel, 1-pixel), 1-pixel, which is a resolution value of the BV value for the target block, may be expressed and transmitted as a 1-bit codeword '1'.

**[Table 7]**

| **Index** | **Resolution** | **Codeword** | **Bits** |
|---|---|---|---|
| 0 | 4-pixel | 0 | 1 |
| 1 | 1-pixel | 1 | 1 |

In this case, the decoder may compensate for the BV value transmitted at a resolution of 1-pixel in units of 1/4-pixels through a template matching process.

A maximum number of indices and resolution values indicating a resolution of BV values described above with reference to Tables 6 and 7 are examples, and the present disclosure is not limited thereto, and video compression performance may be improved through compensation for BV values using template matching as described above.

The intra prediction method described with reference to FIGS. 7 and 8 may be performed by a video encoding device and a video decoding device according to an embodiment of the present disclosure, and may be performed, for example, by an intra/IBC prediction part 161 of the video encoder 100 shown in FIG. 1 or an intra/IBC prediction part 261 of the video decoder 200 shown in FIG. 4.

Meanwhile, the method of using template matching for intra prediction as described above may also be applicable to inter prediction.

Hereinafter, embodiments for a method of using template matching for inter prediction will be described, and descriptions of the methods that are the same as those of using template matching for intra prediction described with reference to FIGS. 7 and 8 will be omitted.

According to one embodiment of the present disclosure, template matching may be used for inter prediction in a merge/skip mode.

As a method of using template matching in merge and skip modes among inter prediction modes, after configuring a merge candidate list, an error value for each candidate may be calculated through template matching, and the candidate list may be reordered according to the calculated template error value.

Here, the error value, which indicates a difference between a template of a target block and a template of a reference block within a reference picture pointed to by that candidate, may be computed as various values such as SAD, MRSAD, SATD, weighted SAD, or MSE.

The encoder may reorder candidates included in a candidate list in order of smallest template error value, then select a final candidate through a rate-distortion optimization (RDO) process, and transmit an index value of the selected candidate to the decoder through a bitstream.

As described above, as the merge candidate list is reordered in order of smallest template error value, a number of bits for transmitting candidate index values to the decoder may be saved, and in addition, when a candidate having a smallest template error value is selected as a final candidate, the index value may not be transmitted.

For example, when a maximum number of candidates included in the merge candidate list is 5, a binary representation of the 5 candidates may be as shown in Table 8 below.

**[Table 8]**

| **Index** | **MV** | **Codeword** | **Bits** |
|---|---|---|---|
| 0 | (1,1) | 0 | 1 |
| 1 | (1,0) | 10 | 2 |
| 2 | (0,1) | 110 | 3 |
| 3 | (2,0) | 1110 | 4 |
| 4 | (2,1) | 1111 | 4 |

In the case of Table 8, when a value of MV (0,1) having index 2 is selected as a final candidate through the RDO process in a motion vector (MV) candidate list, a MV index value may be transmitted to the decoder by being included in the bitstream as a 3-bit codeword "110".

Table 9 below shows an example of a result of reordering the motion vector candidate list shown in Table 8 in order of smallest template error value.

**[Table 9]**

| **Index** | **MV** | **Codeword** | **Bits** |
|---|---|---|---|
| 0 | (0,1) | 0 | 1 |
| 1 | (1,0) | 10 | 2 |
| 2 | (1,1) | 110 | 3 |
| 3 | (2,1) | 1110 | 4 |
| 4 | (2,0) | 1111 | 4 |

In the case of Table 9, when a value of MV (0,1) is selected as a final candidate through the RDO process in a motion vector candidate list, a MV index value may be represented as a 1-bit codeword "0", and a number of bits to pass the MV index value to the decoder may be saved.

A maximum number of candidates, binarization method, and MV value of the candidate list described above with reference to Table 8 and Table 9 are examples, and the present disclosure is not limited thereto, and video compression performance may be improved through candidate list reordering using template matching as described above.

According to another embodiment of the present disclosure, template matching may be used for inter prediction in an advanced motion vector prediction (AMVP) mode.

As a first embodiment for a method of using template matching in an AMVP mode among inter prediction modes, after configuring an AMVP candidate list, an error value for each candidate may be calculated through template matching, and the candidate list may be reordered according to the calculated template error value.

The encoder may reorder candidates included in a candidate list in order of smallest template error value, then select a final candidate through a rate-distortion optimization (RDO) process, and transmit an index value of the selected candidate to the decoder through a bitstream.

Meanwhile, when a maximum number of candidates included in the AMVP candidate list is 2, the encoder may configure an AMVP candidate list including 2 candidates, and then select a candidate with a small error value through a template matching process for each candidate.

In this case, the encoder does not transmit an AMVP index value to the decoder, and the decoder may derive and use the AMVP index value itself through the template matching process.

As a second embodiment for a method of using template matching in an AMVP mode among inter prediction modes, a reference picture used in the AMVP mode may be selected by using template matching.

When information related to a motion vector (MV) for a target block, such as a motion vector difference (MVD) and an MVP index value, is transmitted to the decoder, the decoder may derive a MV value even though a location of the reference picture is not known.

Meanwhile, since slice header information of a current picture includes information on a reference picture list used by that slice, the decoder may know a list of reference pictures available for the current block.

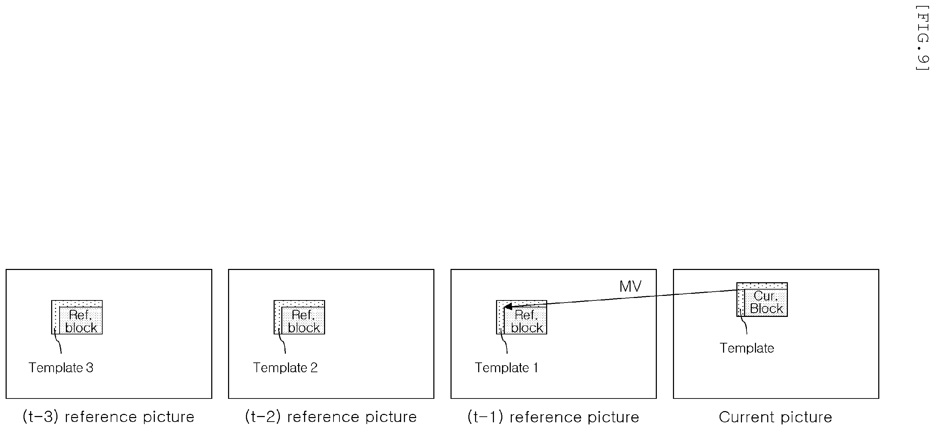

For example, as shown in FIG. 9, when a (t-1) reference picture, a (t-2) reference picture, and a (t-3) reference picture can be used for the current block (Cur. Block) according to the slice header information, reference block (Ref. block) candidates for the same location pointed to by an MV value derived from an MVD and MVP index value in each of the three reference pictures may be acquired.

In this case, for each of the three reference block candidates, an error value between a template surrounding the current block (Cur. Block) and a template (Template) 1, 2, 3 surrounding the reference block (Ref. block) may be calculated, and a reference block candidate with a smallest calculated error value may be selected as a final reference block.

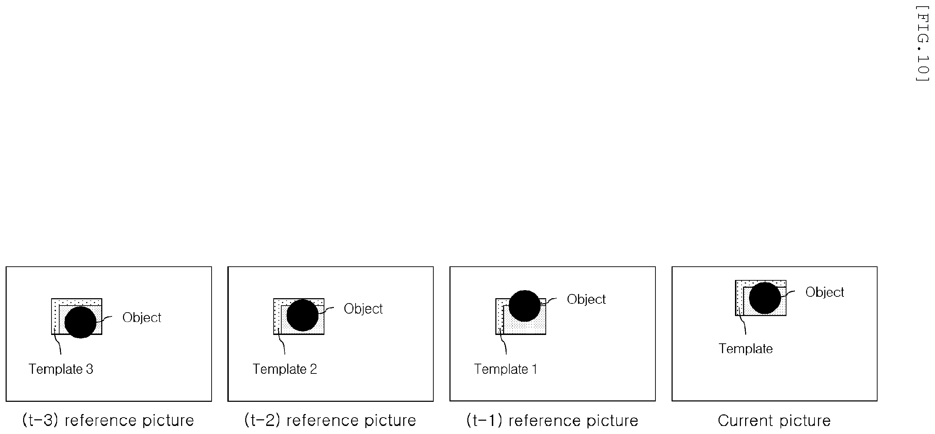

As shown in FIG. 10, when an object moves across subsequent pictures, among the templates (Template) 1, 2, 3 of the three reference block candidates, a template with a smallest error value with a template of the current block (Cur. Block) may be a template (Template) 2 in the (t-2) reference picture.

Accordingly, a reference picture for the current block (Cur. Block) may be determined as the (t-2) reference picture, and the decoder may select a reference picture for the current block (Cur. Block) without receiving a reference picture index value from the encoder.

Alternatively, after configuring a reference picture list for the current block (Cur. Block), a template error value for the reference block pointed to by the MV value within each reference picture may be calculated through template matching, and the reference picture list may be reordered in order of smallest calculated template error value.

In this case, the encoder may reorder reference pictures included in a reference picture list in order of smallest template error value, then select a final reference picture through a ratedistortion optimization (RDO) process, and transmit a reference picture index value of the selected candidate to the decoder through a bitstream.

As described above, as the reference picture list is reordered in order of smallest template error value, a reference picture in which a reference block similar to a target block is located may be arranged above the reference picture list through a template matching process, thereby saving a number of bits for transmitting the reference picture index value to the decoder.

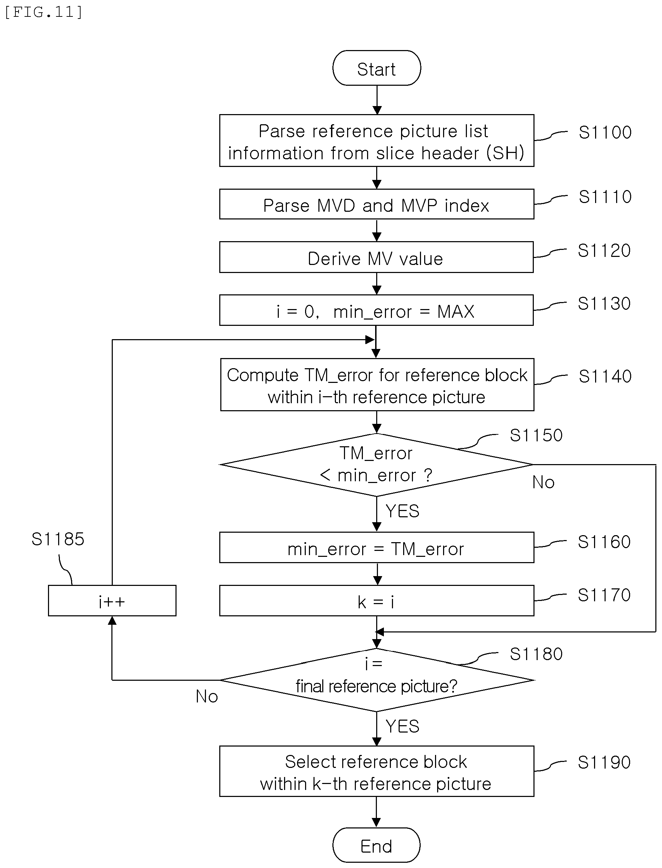

FIG. 11 is a flowchart showing one embodiment of a method for selecting a reference picture from a reference picture list using template matching, and a description of the shown method that is the same as that of the foregoing description will be omitted.

Referring to FIG. 11, information on a reference picture list (ref.pic.list) is parsed from a slice header (SH) for a target block (step S1100).

The MVD and MVP index value are parsed (step S1110) to derive an MV value using the parsed MVD and MVP index value (step S1120).

i is set to "0", and a minimum error value (min_error) is set to a preset value MAX (step S1130).

Then, for a reference block pointed to by the MV value derived in step S1120 within an i-th reference picture in the reference picture list, a template error value (TM_error) with a target block is computed (step S1140).

When the template error value (TM_error) computed in step S1140 is smaller than the minimum error value (min_error) (step S1150), the minimum error value (min_error) is set to the template error value (TM_error) computed in step S1140 (step S1160), and k is set to i (step S1170).

Next, when the i-th reference picture is a final reference picture (final ref.pic) (step S1180), a k-th reference picture is selected as a reference picture for the target block, and a block pointed to by the MV value within the k-th reference picture is selected as a reference block for the target block (step S1190).

Meanwhile, as a result of the determination in step S1150, when the template error value (TM_error) computed in step S1140 is not smaller than the minimum error value (min_error), steps S1160 and S1170 are skipped, and step S1180 is performed.

Furthermore, as a result of the determination in step S1180, when the i-th reference picture is not the final reference picture (final ref.pic), i is increased by "1" (step S1185), and then the process returns to step S1140 to repeatedly perform the foregoing steps for a next reference picture within the reference picture list.

As a third embodiment for a method of using template matching in an AMVP mode among inter prediction modes, instead of transmitting a value representing a resolution or precision of a motion vector (MV) to the decoder, a MV value may be transmitted to the decoder at high resolution (or precision), and the MV value may be compensated to a lower resolution (or precision) using template matching in the decoder.

For example, the encoder may transmit the MV value to the decoder at 1/4-pixel resolution, and the decoder may compensate or refine the MV value at 1/16-pixel resolution using template matching.

In this way, the encoder may not transmit an index (e.g., amvr index) value to indicate a resolution of the MV value, but the decoder may compensate for the MV value in units of pixels lower than the resolution of the transmitted MV value, thereby saving a number of bits for transmitting that index (e.g., amvr index).

Alternatively, the number of the resolution for the MV value may be reduced from the existing four resolutions (1/4-pixel, 1/2-pixel, 1-pixel, 4-pixel) to a smaller number, for example, two resolutions (1/4-pixel, 1-pixel) so as to allow the encoder to transmit an index value for the final selected one of the two resolutions to the decoder, thereby saving a number of bits required to transmit that index (e.g., amvr index).

Here, the method in which the decoder compensates for an MV value using template matching may be the same as that in which the decoder compensates for a BV value using template matching in intra prediction in an IBC mode, and a detailed description thereof will be omitted.

As a fourth embodiment for a method of using template matching in an AMVP mode among inter prediction modes, in the case of bi-prediction using Bi-prediction with CU-level Weight (BCW), the encoder may not transmit a BCW index value for indicating weights applied to bidirectional reference blocks to the decoder, but the decoder may derive weight values using template matching in the decoder.

In the case of BCW, in order to represent one of weights w1, w2 for each of bidirectional reference blocks, the encoder may specify a BCW index value as shown in Table 10 below and transmit it to the decoder.

**[Table 10]**

| Index | Weight | Codeword | Bits |
|---|---|---|---|
| 0 | 3/8 | 00 | 2 |
| 1 | 4/8 | 1 | 1 |
| 2 | 5/8 | 01 | 2 |

Meanwhile, the decoder may generate one reference block by applying, according to a BCW index value transmitted from the encoder, the corresponding weight value w1 to a reference block in a direction of list_0, and applying a weight value w2 obtained by subtracting that weight value w1 from "1" to a reference block in a direction of list_1.

In contrast, according to an embodiment of the present disclosure, a decoder may calculate an error value between a template of a target block and a template of that reference block for each of bidirectional reference blocks, and determine a weight for each of the bidirectional reference blocks based on the calculated template error value.

Specifically, the decoder may generate a single reference block through a weighted average of bidirectional reference blocks by assigning a high weight to a reference block with a small template error value and a lower weight to a reference block with a large template error value.

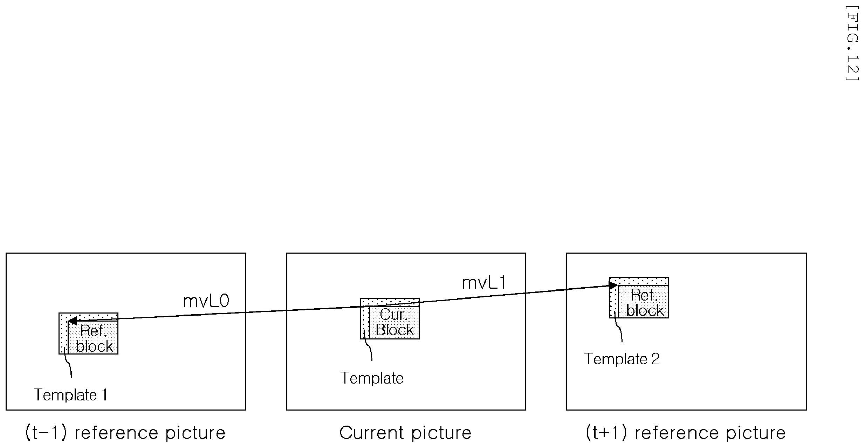

Referring to FIG. 12, for a current block (Cur. Block), a reference block (Ref. block) in a (t-1) reference picture pointed to by a motion vector mvLO in a direction of list_0 and a reference block (Ref. block) in a (t+1) reference picture pointed to by a motion vector mvL1 in a direction of list_1 may be acquired.

Furthermore, for each of bidirectional reference blocks, an error value between a template surrounding the current block (Cur. Block) and a template (Template) 1, 2 surrounding the reference block (Ref. block).

In this case, between bidirectional reference blocks, a weight of 5/8 may be assigned to a reference block with a smaller error value and a weight of 3/8 may be assigned to a reference block with a larger error value.

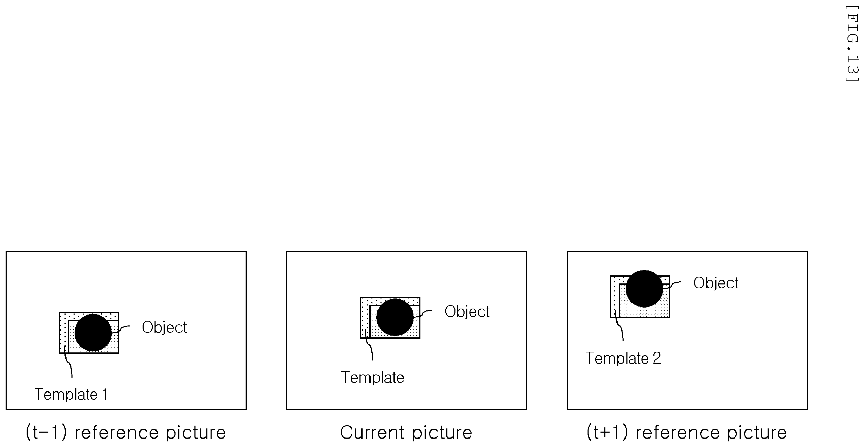

For example, as shown in FIG. 13, when an object moves across subsequent pictures, between the templates (Template) 1, 2 of bidirectional reference blocks, a template with a smallest error value for the current block (Cur. Block) may be a template (Template) 1 in the (t-1) reference picture.

Accordingly, a weight of 5/8 may be assigned to the reference block in the (t-1) reference picture, and a weight of 3/8 may be assigned to the reference block in the (t+1) reference picture.

In this embodiment, bi-prediction may use reference pictures in different directions based on the current picture, such as the (t-1) reference picture and the (t+1) reference picture, or may use other reference pictures in the same direction based on the current picture, such as the (t-1) reference picture and the (t-2) reference picture. That is, bi-prediction in the present disclosure is not limited to a specific direction, and may include all prediction methods using two reference pictures.

Additionally, in this embodiment, bi-prediction may use reference blocks pointed to by two different motion vectors within the (t-1) reference picture. That is, bi-prediction in the present disclosure is not limited to two different reference pictures, and may include all prediction methods using two different reference blocks within a single reference picture.

As described above, instead of transmitting an index value (e.g., BCW index) to indicate weights for bidirectional reference blocks, the decoder may derive weights of the bidirectional reference blocks using template matching, thereby saving a number of bits for transmitting that index (e.g., BCW index).

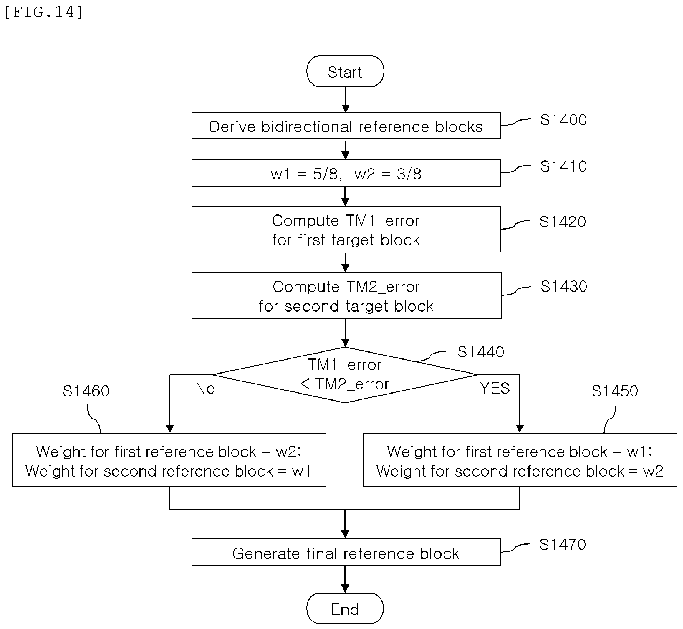

FIG. 14 is a flowchart showing one embodiment of a method of deriving weights for bidirectional reference blocks using template matching, and a description of the shown method that is the same as that of the foregoing description will be omitted.

Referring to FIG. 14, bidirectional reference blocks are derived by using motion vectors mvL0, mvL1 of a target block (step S1400).

A first weight w1 assigned to one of the bidirectional reference blocks is set to 5/8, and a second weight w2 assigned to the other of the bidirectional reference blocks is set to 3/8 (step S1410).

Here, the values 5/8, 3/8 set as the first and second weights w1, w2 are examples, and the present disclosure is not limited thereto, and other values may be set such that the first weight w1 is greater than the second weight w2.

Between the bidirectional reference blocks, a template error value (TM1_error) with respect to the target block is computed for a first reference block (step S1420), and a template error value (TM2_error) with respect to the target block is computed for a second reference block (step S1430).

Next, the template error value (TM1_error) for the first reference block and the template error value (TM2_error) for the second reference block are compared (step S1440).

As a result of the comparison, when the template error value (TM1_error) for the first reference block is smaller than the template error value (TM2_error) for the second reference block, a first weight w1 is assigned to the first reference block and a second weight w2 is assigned to the second reference block (step S1450).

Conversely, when the template error value (TM1_error) for the first reference block is not smaller than the template error value (TM2_error) for the second reference block, a second weight w2 is assigned to the first reference block and a first weight w1 is assigned to the second reference block (step S1460).

Meanwhile, when the template error value (TM1_error) for the first reference block and the template error value (TM2_error) for the second reference block have similar values within a preset error range, the same weight, that is, 1/2 may be assigned to the first and second reference blocks.

Then, the weights assigned as above are applied to the bidirectional reference blocks to compute an average value so as to generate a final reference block for the target block (step S1470).

In the above, an embodiment of the present disclosure has been described as an example in which the encoder does not transmit a BCW index value to the decoder, but a number of bits may be saved by reducing a number of BCW indices to two and transmitting the selected index values to the decoder.

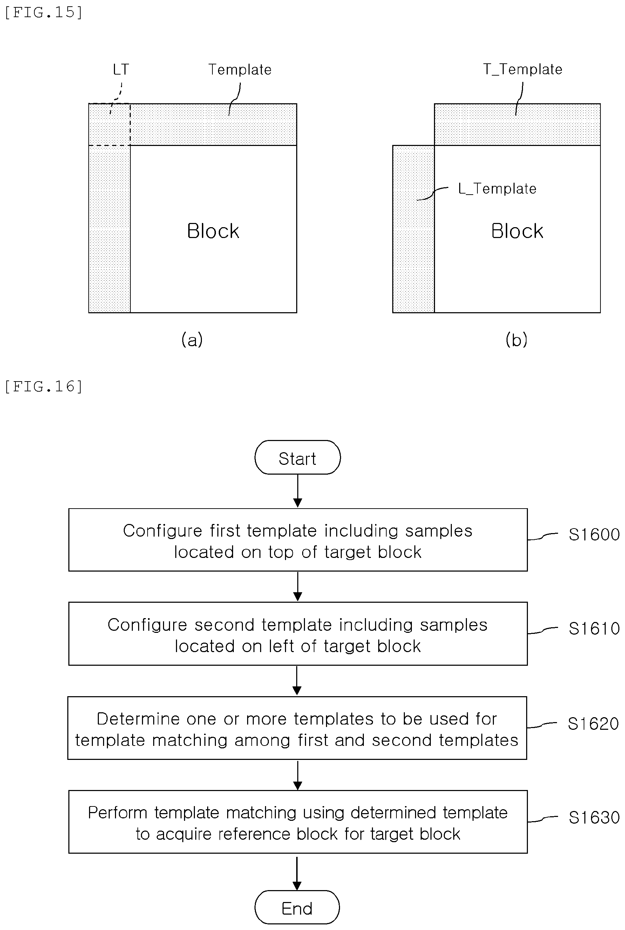

In the above, embodiments of the present disclosure have been described as an example in which a template is configured with samples located around the target block in an L-shape, as shown in (a) of FIG.15, but the present disclosure is not limited thereto, and may be configured with samples of various shapes located around the target block.

For example, referring to (b) of FIG. 15, a template may be configured with a top template (T_Template) including samples located on a top of the target block and a left template (L_Template) including samples located on a left of the target block, excluding a top-left area LT in an L-shape template.

FIG. 16 is a flowchart showing one embodiment for a method of setting a reference block using template matching according to the present disclosure, and descriptions of the shown method that are the same as those described with reference to FIGS. 1 to 15 will be omitted.

Referring to FIG. 16, a first template including samples located on a top of the target block is configured (step S1600), and a second template including samples located on a left of the target block is configured (step S1610).

For example, the first template configured in step S1600 may be the same as the top template (T_Template) shown in (b) of FIG. 15, and the second template configured in step S1610 may be the same as the left template (L_Template) shown in (b) of FIG. 15, but the present disclosure is not limited thereto.

Next, between the first and second templates configured in steps S1600 and S1610, one or more templates used for template matching are determined (step S1620).

For example, in step S1620, one of three templates consisting of a first template, a second template, and a combination of the first and second templates may be determined as a template to be used for template matching.

Meanwhile, in step S1620, a flag indicating whether three templates are used may be identified, and that flag may be included in a bitstream as a high level syntax (HLS), and located in at least one of a sequence parameter set (SPS), a picture parameter set (PPS), a picture header (PH), and a slice header (SH)

In addition, when three templates are available, an index value indicating a template to be used for template matching from among the three templates may be identified, and that index value may be included in a bitstream in units of blocks at a CU level.

In this case, during a process of setting a reference block for a target block through template matching as described above, information on templates surrounding the target block and the reference block used for template matching may be explicitly signaled from the encoder to the decoder.

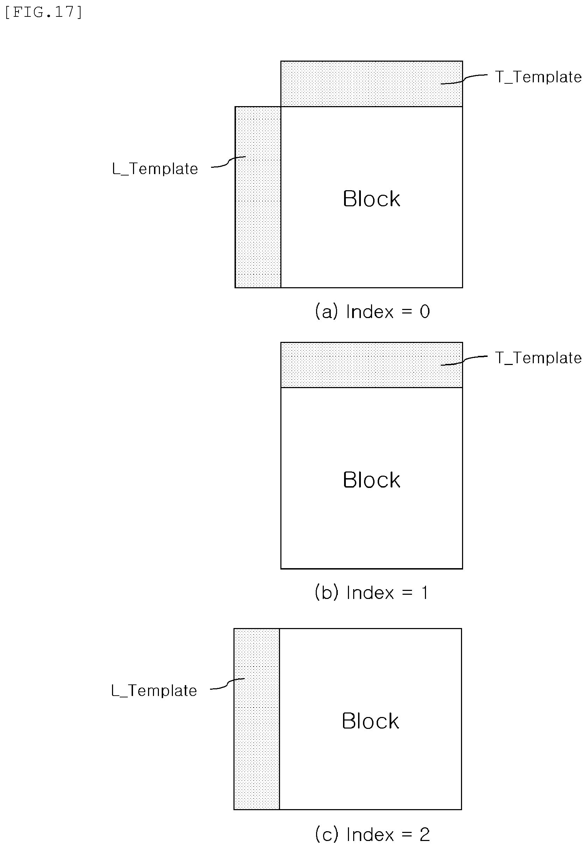

Referring to FIG. 17 and Table 11 below, an index value "0" may be assigned to a template Top & Left that includes both the top template (T_Template) and the left template (L_Template), an index value "1" is assigned to a template Only Top that includes only the top template (T_Template), and an index value "2" is assigned to a template Only Left that includes only the left template (L_Template).

**[Table 11]**

| **Index** | **template** | **Codeword** | **Bits** |
|---|---|---|---|
| 0 | Top & left | 0 | 1 |
| 1 | Only top | 10 | 2 |
| 2 | Only left | 11 | 2 |

For example, when a flag included in the high level syntax (HLS) for the target block is "on", the three templates Top & Left, Only Top, Only Left may be used for the target block.

Furthermore, the encoder may allow an index value indicating a template used in the target block from among the three templates Top & Left, Only Top, Only Left to be included in a bitstream and transmit it to the decoder.

That is, an index value indicating a template used in the target block may be included in the bitstream only when the flag included in the high level syntax (HLS) is "on".

As another example, during the process of setting a reference block for a target block through template matching as described above, information on templates surrounding the target block and the reference block used for template matching may not be transmitted to the decoder, but may be implicitly derived by the decoder.

More specifically, a template used for template matching may be determined based on at least one of the shape and location of the target block.

For example, when the shape of the target block is a square, a combination of the first and second templates may be determined as a template used for template matching.

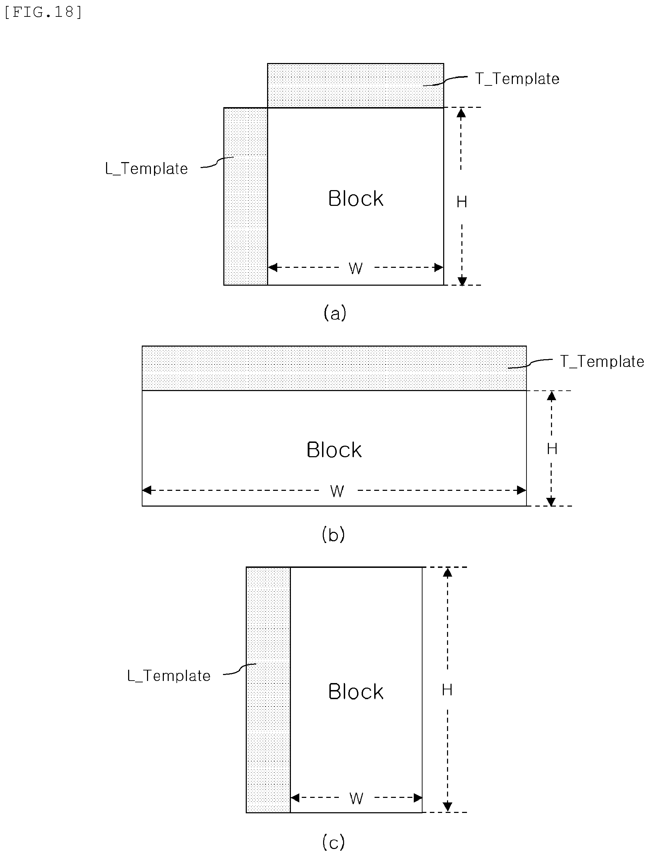

Referring to (a) of FIG. 18, when a width W and height H of the target block are the same, a template Top & Left that includes both the top template (T_Template) and the left template (L_Template) may be used.

In addition, when a width of the target block is greater than height thereof, a first template including samples located on a top of the target block may be determined as a template used for template matching.

Referring to (b) of FIG. 18, when a width W of the target block is greater than a height H thereof and has an elongated rectangular shape in a horizontal direction, a template Only Top including only the top template (T_Template) may be used.

Meanwhile, when the height of the target block is greater than the width, a second template including samples located on a left of the target block may be determined as a template to be used for template matching.

Referring to (c) of FIG. 18, when the height H of the target block is greater than the width W and has a vertically elongated rectangular shape, a template Only Left including only the left template (L_Template) may be used.

As another example, when the width W of the target block is greater than the height H, the left template (L_Template) including samples located on a left of the target block may be determined as a template used for template matching, and when the height H of the target block is greater than the width W, a top template (T_Template) including samples located on a top of the target block may be determined as a template used for template matching.

As described with reference to (b) and (c) of FIG. 18, when the shape of the target block is rectangular, using only one of the top template (T_Template) and the left template (L_Template) may be applied only when the width W and height H of the target block differ from each other by more than twice, but the present disclosure is not limited thereto.

Hereinafter, in performing a prediction method as described with reference to FIGS. 1 to 18, embodiments for a method of configuring a template when a reference block (or target block) is located at that picture boundary, and at least some areas of the template of that reference block (or target block) extend beyond the picture boundary will be described.

Hereinafter, embodiments of the present disclosure will be described by using the case of a reference block as an example, but the present disclosure is not limited thereto, and embodiments of the present disclosure may also be applied to a current block within a current picture.

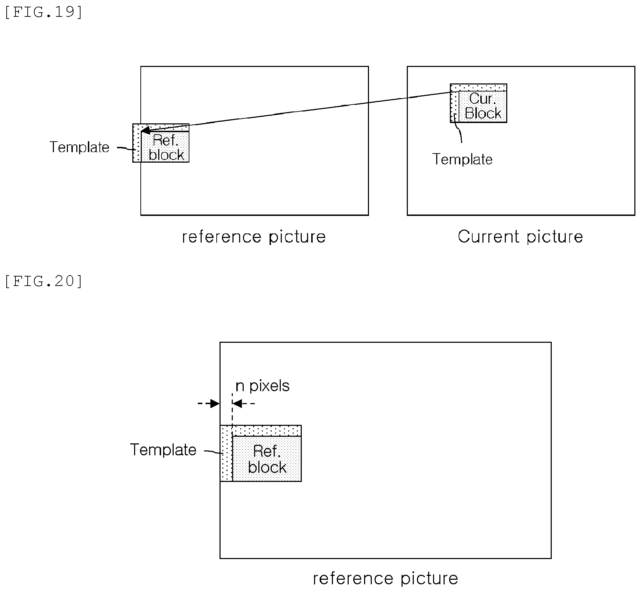

Referring to FIG. 19, when a reference block (Ref. block) is located adjacent to a boundary of a reference picture, some areas of a template for that reference block may extend beyond that reference picture.

As a first embodiment for configuring a template in a case where some areas of a template extend beyond a picture boundary, a location of a reference block may be restricted so as not to allow a template of the reference block to extend beyond the picture boundary.

Specifically, when the template has a width corresponding to n pixels, a location of the reference block (Ref. block) may be restricted such that the reference block (Ref. block) is located within n pixels from the boundary of the reference picture, as shown in FIG. 20.

For example, when a width of the template is 4 pixels and a resolution of the reference picture is 1920x1080, a top-left sample of the reference block may be located from 4 to 1919 on a horizontal side (0 to 1919) and from 4 to 1079 on a vertical side (0 to 1079).

Since the template is located on a left and top of the reference block, location restriction for the reference block described above may be applied not only to a left boundary of the picture but also to a top boundary thereof.

As a second embodiment for configuring a template in a case where some areas of a template extend beyond the picture boundary, pixel values closest to a boundary of the reference picture may be copied to generate a template area that extends beyond the boundary of the reference picture.

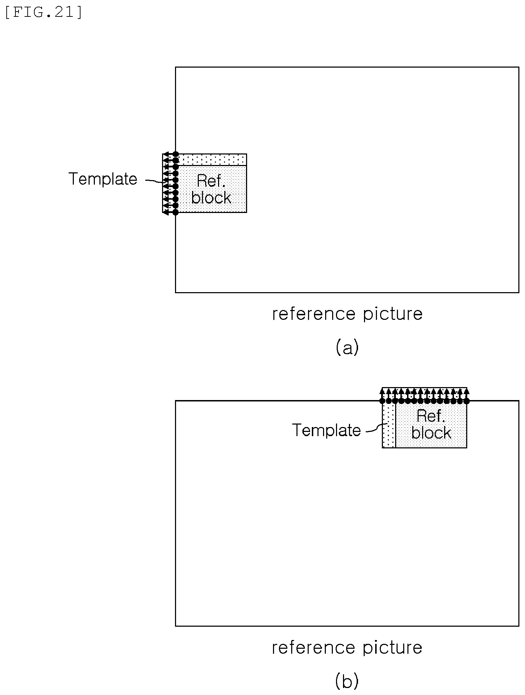

Referring to (a) of FIG. 21, when a left area of the template of the reference block (Ref. block) extends beyond a boundary of the reference picture, pixel values of an outermost edge closest to a left boundary of the reference picture may be copied to fill pixel values of the left area of the template that extends beyond the picture boundary.

Additionally, referring to (b) of FIG. 21, when a top area of the template of the reference block (Ref. block) extends beyond a boundary of the reference picture, pixel values of an outermost edge closest to a top boundary of the reference picture may be copied to fill pixel values of the top area of the template that extends beyond the picture boundary.

For example, using Equation 1 below, pixel values at an outermost edge of the reference picture may be copied as described above to fill pixel values of the template that extends beyond the picture boundary. [Equation 1] $\begin{matrix}if \left(x<0\right) \\ xA = 0 \\ else \\ xA = x\end{matrix}$

In Equation 1, x is location information of any pixel included in a template, and xA is location information updated for that pixel.

Here, when x is less than 0, it may refer to that the corresponding pixel of the template extends beyond the picture boundary.

In this case, when x is less than 0, a location of that pixel may be updated to a location of 0 to copy and use a value of a 0-th pixel.

As a third embodiment for configuring a template in a case where some areas of a template extend beyond the picture boundary, areas of the template that extend beyond the picture boundary may be excluded during a template matching process.

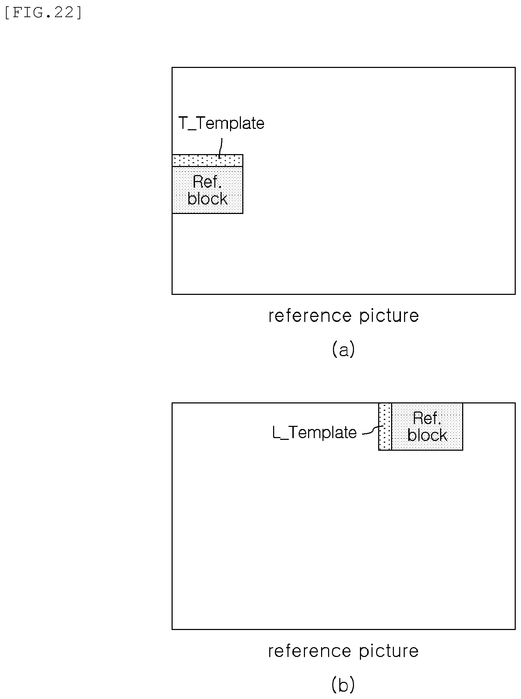

Referring to (a) of FIG. 22, when a left area of the template of the reference block (Ref. block) extends beyond a boundary of the reference picture, template matching may be performed by using only the top template (T_Template).

Additionally, referring to (b) of FIG. 22, when a top area of the template of the reference block extends beyond a boundary of the reference picture, template matching may be performed by using only the left template (L_Template).

Although embodiments of the present disclosure have been described above as an example in which the template of the reference block extends beyond a boundary of the reference picture, the present disclosure is not limited thereto, and may also be applied when the template of the current block extends beyond the picture boundary.

This embodiment may be any one of the methods in which, during a process of setting a reference block for a target block through template matching, information on templates surrounding the target block and the reference block used for template matching is not transmitted to the decoder, but is implicitly derived by the decoder.

More specifically, a template used for template matching may be determined based on at least one of the shape and location of the target block, and this embodiment is an embodiment corresponding to the location of the target block.

As shown in (a) of FIG. 22, when the location of the reference block comes into contact with a left boundary of the picture, only the top template (T_Template) may be used, and as shown in (b) of FIG. 22, when the location of the reference block comes into contact with a top boundary of the picture, only the left template (L_Template) may be used, and for other locations of the reference block, a template Top & Left including both the top template (T_Template) and the left template (L_Template) may be used.

As a fourth embodiment for configuring a template in a case where some areas of the template extend beyond the picture boundary, pixel values of the areas of the template that extend beyond the picture boundary may be copied to fill pixel values of the corresponding area located on an opposite boundary of that picture.

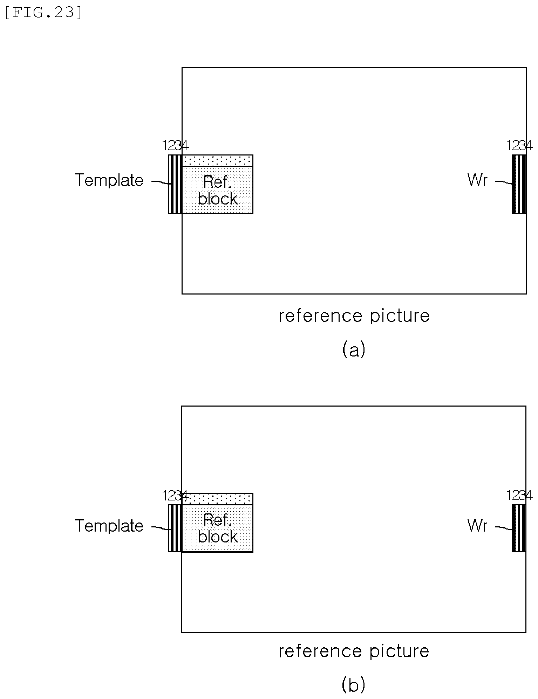

Referring to (a) of FIG. 23, when a left area of the template of the reference block (Ref. block) extends beyond a boundary of the reference picture, pixel values of the corresponding area (Wr) located at a right boundary of the reference picture may be copied to fill pixel values of the left area of the template that extends beyond the picture boundary.

For example, a left area of the template marked as '1234' may be matched to an area (Wr) marked as '1234' located at a right boundary of the reference picture to fill pixel values for the left area of the template that extends beyond the picture boundary.

As described above, a method of filling a template area that extends beyond the picture boundary using the corresponding area of the opposite boundary may be performed when a specific flag (e.g., ref_wraparound_enabled_flag) is 'on'.

The ref_wraparound_enabled_flag is a flag value indicating processing related to equirectangular projection (ERP) from among 360 video formats, and when that flag value is 'on', a left boundary area of the picture and a right boundary area of the picture may belong to areas adjacent to each other in a 3D real world as a feature of a 360 video according to an ERP video format. Accordingly, information on the left boundary area of the picture and the right boundary area of the picture may be shared with each other.

For example, using Equation 2 below, pixel values of the corresponding area located at the opposite boundary of the reference picture may be copied as described above to fill pixel values of the template that extends beyond the picture boundary. [Equation 2] $\begin{matrix}if \left(x<0\right) \\ xA = x + picWidth \\ elseif \left(x>picWidth-1\right) \\ xA = x - picWidth \\ else \\ xA = x\end{matrix}$

In Equation 2, x is location information of any pixel included in a template, and xA is location information updated for that pixel.

Here, when x is less than 0 or greater than picWidth-1, it may refer to that the corresponding pixel of the template extends beyond the picture boundary.

In this case, when x is less than 0, a location of that pixel may be updated to a right boundary location of the picture by adding picWidth to x, and when x is greater than picWidth-1, the location of that pixel may be updated to a left boundary location of the picture by subtracting picWidth from x.

Meanwhile, as described above, depending on the updated location of the pixel, pixel values of the template that extends beyond the picture boundary may be filled.

As shown in (b) of FIG. 23, when the left template (L Template) of the template Top & Left template of the reference block (Ref. block) extends beyond a boundary of the reference picture, the left template (L_Template) extending beyond the picture boundary may be filled by using the corresponding area (Wr) located at a right boundary of the reference picture.

Furthermore, depending on a value of ref_wraparound_enabled_flag, either a method of the second embodiment or a method of the fourth embodiment as described above may be used to fill the template area extending beyond the picture boundary.

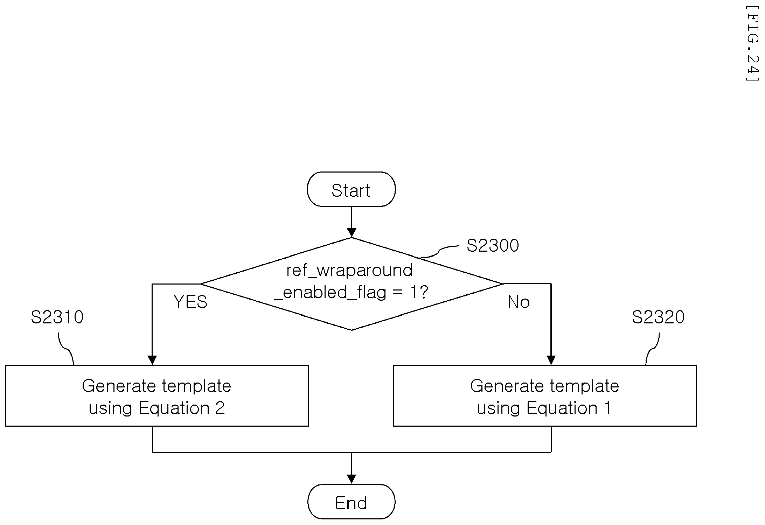

Referring to FIG. 24, the value of ref_wraparound_enabled_flag is checked (step S2300), and when it is "1", a template is generated by filling the template area extending beyond the picture boundary using the corresponding area located on an opposite side of the picture according to a method of the fourth embodiment as described above using Equation 2 (step S2310).

Meanwhile, when the value of ref_wraparound_enabled_flag is not "1", a template is generated by filling the template area extending beyond the picture boundary using pixel values located at an outermost edge of the picture according to a method of the second embodiment as described above using Equation 1 (step S2320).

As another example, when the value of ref_wraparound_enabled_flag is not "1", the method of the second embodiment using Equation 1 is not limited, and the method of the first embodiment or the third embodiment may be applied instead of the second embodiment.

As a fifth embodiment for configuring a template in a case where some areas of the template extend beyond the picture boundary, pixel values of the areas of the template that extend beyond a sub-picture boundary may be copied to fill pixel values located at an outermost edge of that sub-picture.

As described above, the method of filling a template area extending beyond the sub-picture boundary using pixel values located at an outermost edge of the sub-picture may be performed when a specific flag (e.g., subpic_treated_as_pic_flag) is 'on' while using the sub-picture.

The subpic_treated_as_pic_flag may indicate whether the boundary of each sub-picture can be processed independently when a single picture is divided into a plurality of sub-pictures, and when that flag value is 'on', the sub-picture may be encoded and decoded independently of other sub-pictures.

For example, using Equation 3 below, pixel values located at an outermost edge of the sub-picture may be copied as described above to fill pixel values of the template that extends beyond the sub-picture boundary. [Equation 3] $\begin{matrix}if \left(x<subPicLeftBoundaryPos\right) \\ xA = subPicLeftBoundaryPos \\ else \\ xA = x\end{matrix}$

In Equation 3, x is location information of any pixel included in a template, and xA is location information updated for that pixel.

Here, when x is less than subPicLeftBoundaryPos, it may refer to that the corresponding pixel of the template extends beyond the sub-picture boundary.

In this case, when x is smaller than subPicLeftBoundaryPos, a location of that pixel can be updated to a location of subPicLeftBoundaryPos to copy and use a value of a subPicLeftBoundaryPos-th pixel.

As another example, when the value of subpic_treated_as_pic_flag value is "1", the method of the second embodiment that copies pixel values located at an outermost edge of the sub-picture to fill pixel values of the template extending beyond the sub-picture boundary is not limited, the first or third embodiment may also be applied instead of the second embodiment.

Furthermore, depending on at least one value of subpic_treated_as_pic_flag and Ref_wraparound_enabled_flag, any one of the methods of the first to fifth embodiments as described above may be used to fill the template area extending beyond the picture boundary.

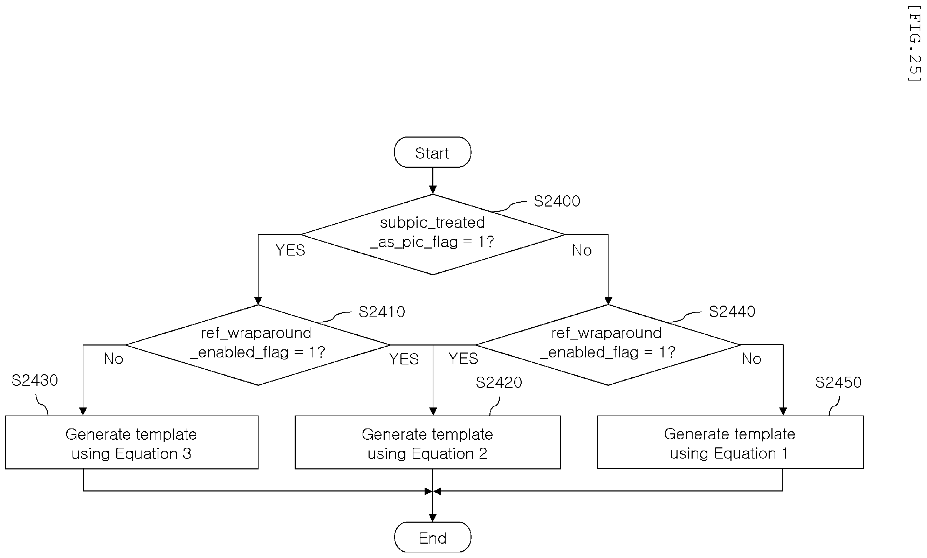

Referring to FIG. 25, the value of subpic_treated_as_pic_flag is checked (step S2400), and when it is "1", the value of ref_wraparound_enabled_flag is checked (step S2410).

As a result of the check in step S2410, when the value of ref_wraparound_enabled_flag is "1", a template is generated by filling the template area extending beyond the picture boundary using the corresponding area located on an opposite side of the picture according to the method of the fourth embodiment as described above using Equation 2 (step S2420).

As a result of the check in step S2410, when the value of ref_wraparound_enabled_flag is not "1", a template is generated by filling the template area extending beyond the sub-picture boundary using pixel values located at an outermost edge of the sub-picture according to the method of the fifth embodiment as described above using Equation 3 (step S2430). Here, the fifth embodiment may also be applied to the first embodiment or third embodiment instead of the second embodiment.

Meanwhile, when the value of subpic_treated_as_pic_flag is not "1", the value of ref_wraparound_enabled_flag is checked (step S2440), and when the value of ref_wraparound_enabled_flag is "1", a template is generated by filling the template area extending beyond the picture boundary using the corresponding area located on an opposite side of the picture according to the method of the fourth embodiment as described above using Equation 2 (step S2420).

As a result of the check in step S2440, when the value of ref_wraparound_enabled_flag is not "1", a template is generated by filling the template area extending beyond the picture boundary using pixel values located at an outermost edge of the picture according to the method of the second embodiment as described above using Equation 1 (step S2450). Here, the first embodiment or the third embodiment may also be applied instead of the second embodiment.

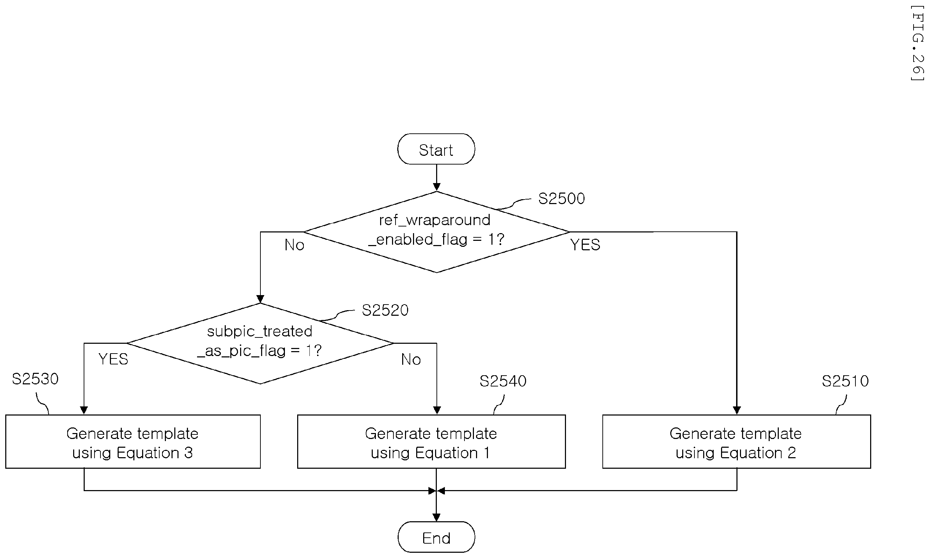

Referring to FIG. 26, the value of ref_wraparound_enabled_flag is first checked (step S2500), and when it is "1", a template is generated by filling the template area extending beyond the picture boundary using the corresponding area located on an opposite side of the picture according to a method of the fourth embodiment as described above using Equation 2 (step S2510).

As a result of the check in step S2500, when the value of ref_wraparound_enabled_flag is not "1", the value of subpic_treated_as_pic_flag is checked (step S2520), and when it is "1", a template is generated by filling the template area extending beyond the sub-picture boundary using pixel values located at an outermost edge of the sub-picture according to the method of the fifth embodiment as described above using Equation 3 (step S2530). Here, the fifth embodiment may also be applied to the first embodiment or third embodiment instead of the second embodiment.

Meanwhile, when both the value of ref_wraparound_enabled_flag and the value of subpic_treated_as_pic_flag are not "1", a template is generated by filling the template area extending beyond the picture boundary using pixel values located at an outermost edge of the picture according to the method of the second embodiment as described above using Equation 1 (step S2540). Here, the first embodiment or the third embodiment may also be applied instead of the second embodiment.

The foregoing methods in this specification may be performed through a processor in a video encoder or a video decoder. Additionally, the encoder may generate a bitstream that is decoded by a video signal processing method, and the bitstream generated by the encoder may be stored in a computer-readable non-transitory storage medium (recording medium).

The foregoing embodiments of the present disclosure may be implemented through various means. For example, embodiments of the present disclosure may be implemented by hardware, firmware, software, or a combination thereof.

Some embodiments may also be implemented in the form of a recording medium including instructions executable by a computer such as a program module executed by the computer. A computer-readable medium may be any available medium that can be accessed by a computer, and includes both volatile and non-volatile media, and removable and non-removable media.

Furthermore, the computer-readable medium may include both a computer storage medium and a communication medium. The computer storage medium includes both volatile and nonvolatile, removable and non-removable media implemented in any method or technology for storing information such as computer-readable instructions, data structures, program modules or other data. The communication medium typically includes computer-readable instructions, data structures or other data in a modulated data signal such as program modules, or other transport mechanisms, and includes any information delivery medium.

In addition, while the preferred embodiments of the present disclosure have been shown and described above, it will be of course understood by those skilled in the art that various modifications may be made without departing from the gist of the disclosure as defined in the following claims, and it is to be noted that those modifications should not be understood individually from the technical concept and prospect of the present disclosure.

## Claims

1. A method of setting a reference block for generating a prediction block using template matching, the method comprising:
configuring a first template including samples located on a top of a target block;
configuring a second template including samples located on a left of the target block;
determining one or more templates to be used for template matching from among the first and second templates; and
performing template matching using the determined one or more templates to acquire a reference block for the target block.

2. The method of claim 1, wherein the determining of the template determines one of three templates consisting of the first template, the second template, and a combination of the first and second templates as a template to be used for the template matching.

3. The method of claim 2, wherein the determining of the template comprises:
checking a flag indicating whether the three templates are used.

4. The method of claim 3, wherein the flag is included in at least one of a sequence parameter set (SPS), a picture parameter set (PPS), a picture header (PH), and a slice header (SH).

5. The method of claim 2, further comprising:
checking an index value indicating a template to be used for the template matching from among the three templates.

6. The method of claim 1, wherein the determining of the template determines a template to be used for the template matching according to at least one of the shape and location of the target block.

7. The method of claim 6, wherein when the shape of the target block is a square, the combination of the first and second templates is determined as a template to be used for the template matching.

8. The method of claim 6, wherein when a width of the target block is greater than a height thereof, the first template is determined as a template to be used for the template matching, and
wherein when a height of the target block is greater than a width thereof, the second template is determined as a template to be used for the template matching.

9. A video encoding device that performs a method of setting a reference block using the template matching of claim 1.

10. The video encoding device of claim 9, wherein an index value for indicating one or more templates to be used for the template matching from among the first and second templates is inserted into at least one of a sequence parameter set (SPS), a picture parameter set (PPS), a picture header (PH), and a slice header (SH), and transmitted as a bitstream.

11. A bitstream generated by the video encoding device of claim 9.

12. A video decoding device that performs a method of setting a reference block using the template matching of claim 1.

13. The video decoding device of claim 12, wherein a template to be used for the template matching is determined according to at least one of the shape and location of the target block.
